(19) Europäisches Patentamt
European Patent Office
Office européen des brevets

(11) EP 3 895 891 A1

# (12) EUROPEAN PATENT APPLICATION
published in accordance with Art. 153(4) EPC

(43) Date of publication:
**20.10.2021 Bulletin 2021/42**

(21) Application number: **19895436.4**

(22) Date of filing: **05.11.2019**

(51) Int Cl.:
***B32B 27/00*** *(2006.01)* ***C09J 183/04*** *(2006.01)*
***C09J 7/38*** *(2018.01)* ***C09J 7/40*** *(2018.01)*

(86) International application number:
**PCT/JP2019/043322**

(87) International publication number:
**WO 2020/121687 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2018 JP 2018231903**

(71) Applicant: **Mitsubishi Chemical Corporation**
**Chiyoda-ku**
**Tokyo 100-8251 (JP)**

(72) Inventor: **OSEKI, Yosuke**
**Tokyo 100-8251 (JP)**

(74) Representative: **Hoffmann Eitle**
**Patent- und Rechtsanwälte PartmbB**
**Arabellastraße 30**
**81925 München (DE)**

## (54) RELEASE FILM

(57) Provided is a novel release film capable of exhibiting excellent releasability against silicone adhesives and yet reducing the content of fluorine atoms. The release film has a first layer formed from a silicone composition containing a fluorine atom-free curable silicone as a main component on at least one side of a film-shaped substrate, and a second layer containing a component having a fluorine-substituted group on the upper side of the first layer, wherein the first layer has an elastic modulus (F1), as measured using a nanoindenter, of 0.16 GPa or more.

[FIG. 1]

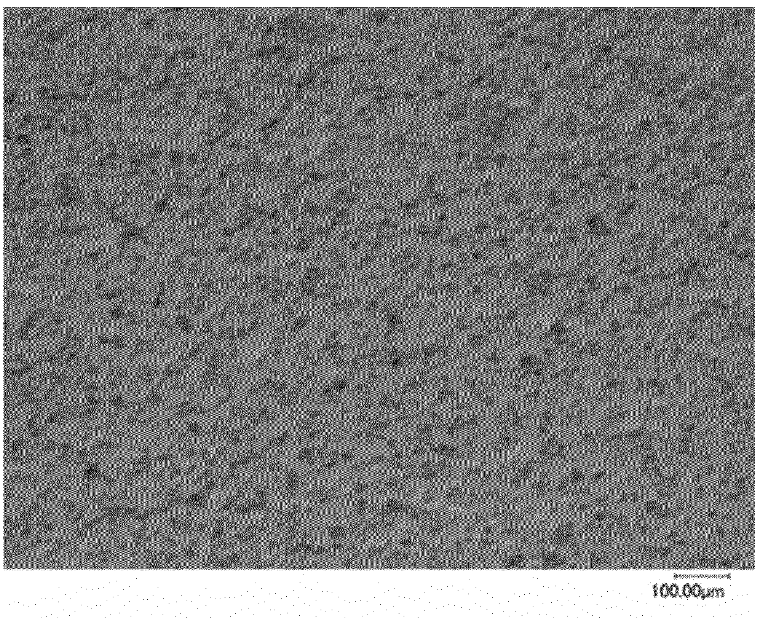




Printed by Jouve, 75001 PARIS (FR)

## Description

TECHNICAL FIELD

The present invention relates to a release film. The present invention particularly relates to a release film having excellent releasability against silicone adhesives.

BACKGROUND ART

In recent years, the number of automobiles equipped with a liquid crystal panel is increasing. In such in-vehicle applications, liquid crystal panels are often exposed to high and low temperatures for a long period of time. Thus, the adhesives used to bond panel-constituting members together are also required to have a high level of weather and heat resistance, and silicone adhesives are attracting attention as adhesives that meet these requirements.

Silicone adhesives have excellent heat resistance, chemical resistance, and transparency. They exhibit adhesion to materials, such as silicone rubber, fluororesin, and metal, which are difficult to adhere to with general adhesives, and also have excellent re-adhesion properties.

Silicone adhesives can be used in tape (film) form as adhesive layers. Such tape-shaped silicone adhesives are usually stored with one or both sides covered with release films before use, and the release films are released at the time of use.

However, silicone release films, which are commonly used as release films, that is, release films coated with a silicone release agent, tend to strongly adhere between the adhesive and the release layer since the chemical structure of the release agent and the adhesive are similar. For this reason, fluorine is introduced into the silicone release agent in order to obtain a low releasing force (light releasability) against silicone adhesives. For example, Patent Document 1 proposes a fluorinated silicone material having a fluorine-substituted group in order to exhibit releasability against silicone adhesives.

CITATION LIST

PATENT DOCUMENT

Patent Document 1: Japanese Patent Laid-Open No. 2011-201035

SUMMARY OF THE INVENTION

PROBLEM TO BE SOLVED BY THE INVENTION

Fluorinated silicones, such as those disclosed in Patent Document 1, are considered to have high chemical stability and low toxicity. However, it is still undeniable that substances having harmful effects on the environment and living organisms may be released during the production process and disposal. In addition, release films coated with a fluorinated silicone release agent are difficult to recycle. From such a viewpoint, it has been thus desired to reduce the amount of fluorine used, that is, the content of fluorine atoms.

Accordingly, the present invention is intended to provide a novel release film capable of exhibiting excellent releasability against silicone adhesives and yet reducing the content of fluorine atoms.

To reduce the content of fluorine atoms in the release film, it can be considered that, for example, the ratio of fluorinated silicone contained in the release layer is reduced, or the film thickness of the release layer is decreased. However, in the former method, the light releasability, which is the original purpose of the present invention, may be impaired, and in the latter method, the release layer may not be uniformly formed or the stability of the releasing force may be deteriorated, resulting in that the problem of the present invention is not solved.

Thus, the present invention has found that by forming the release layer constituting the release film into two layers, of which a first layer close to a substrate layer is made of a specific material, no delamination between layers can occur, light releasability can be exhibited, and the content ratio of fluorine atoms can be significantly reduced.

MEANS FOR SOLVING PROBLEM

The present invention proposes a release film containing: a first layer formed from a silicone composition containing a fluorine atom-free curable silicone as a main component on at least one side of a film-shaped substrate; and a second layer containing a component having a fluorine-substituted group on the upper side of the first layer, wherein the first layer has an elastic modulus (F2), as measured using a nanoindenter, of 0.16 GPa or more.

The present invention also proposes a release film containing: a first layer formed from a silicone composition containing a fluorine atom-free curable silicone as a main component on at least one side of a film-shaped substrate; and a second layer containing a component having a fluorine-substituted group on the upper side of the first layer, wherein the first layer has a diphenyl group.

The present invention also proposes a release film containing: a first layer formed from a silicone composition containing a fluorine atom-free curable silicone as a main component on at least one side of a film-shaped substrate; and a second layer containing a component having a fluorine-substituted group on the upper side of the first layer, wherein the second layer covers at least 50% or more of the surface of the first layer.

The present invention also proposes a release film containing: a first layer formed from a silicone composition containing a fluorine atom-free curable silicone as a main component on at least one side of a film-shaped substrate; and a second layer containing a component having a fluorine-substituted group on the upper side of the first layer, wherein the fluorine atom-free curable silicone is an aqueous-based curable silicone.

## EFFECT OF THE INVENTION

The release film proposed by the present invention has at least two layers of a first layer and a second layer on a film-shaped substrate, in which the first layer formed on the substrate side is a layer formed from a silicone composition containing a fluorine atom-free curable silicone as a main component, and the second layer formed on the surface side in contact with the silicone adhesive is a layer containing a component having a fluorine-substituted group for obtaining light releasability to the silicone adhesive, thereby capable of exhibiting excellent releasability against silicone adhesives and yet reducing the content of fluorine atoms.

The mechanism by which the present invention operates can be considered as follows, but it is not necessary to have all of the following.

(I) Since fluorinated silicones are highly hydrophobic, it is usually expected that coating the second layer on the first layer is difficult unless the underlying layer also contains a fluorine compound (i.e., the coating liquid will be repelled). However, when the first layer is formed mainly of a curable silicone having many polar groups and reactive substituted groups even after being formed on the film-shaped substrate, and having a heavy releasing force against the adhesive, surprisingly, the second layer can be coated thereon even if the first layer does not contain a fluorine compound.

(II) In general, if the second layer does not completely cover the surface of the first layer, the first layer will be exposed on the surface, which is counterproductive in terms of light releasability. With the configuration of the present invention, the effect of light releasability of the second layer can be sufficiently exhibited as long as the second layer covers the surface of the first layer at a predetermined ratio or more.

(III) In general, the thicker the silicone layer of the release film, the lower the releasing force against the adhesive tends to be. With the configuration of the present invention, even if the thickness of the fluorinated silicone-containing layer, which is the second layer, is reduced, a release film having excellent light releasability and capable of significantly reducing the content of fluorine atoms can be obtained by increasing the thickness of the first layer.

## BRIEF DESCRIPTION OF DRAWINGS

FIG. 1 is a micrograph (objective lens: magnification of 5 times) showing the surface of a second layer of a release film produced in Example 1.

FIG. 2 is a micrograph (objective lens: magnification of 5 times) showing the surface of a second layer of a release film produced in Comparative Example 1.

FIG. 3 is a micrograph (objective lens: magnification of 5 times) showing the surface of a second layer of a release film produced in Comparative Example 3.

FIG. 4 is an image magnifying a portion of the micrograph (objective lens: magnification of 5 times) of the surface of the second layer of the release film produced in Comparative Example 3.

FIG. 5 is a micrograph (objective lens: magnification of 5 times) showing the surface of a second layer of a release film produced in Comparative Example 5.

## MODE(S) FOR CARRYING OUT THE INVENTION

Next, the present invention will be described based on exemplary embodiments. However, the present invention is not limited to the embodiments that will be described below.

<Present Release Film>

The release film according to an example of the embodiments of the present invention (referred to as "present release film") has a structure provided with a first layer formed from a silicone composition containing a fluorine atom-free curable silicone as a main component on one or both sides of a film-shaped substrate and a second layer containing a component having a fluorine-substituted group on the upper side of the first layer.

Since the present release film only needs to have a structure provided with a first layer on one or both sides of a film-shaped substrate and a second layer on the upper side of the first layer, other layers may be interposed between the film-shaped substrate and the first layer, or between the first layer and the second layer, as described later. The laminated structure of the present release film will be described later.

In the present invention, the term "upper side" means the front surface side direction.

The term "surface of the underlying layer" means the surface of the first layer when the second layer is directly laminated on the upper side of the first layer, or the surface of the "other layer" when the "other layer" is interposed between the first layer and the second layer.

The second layer covers the surface of the underlying layer at an area ratio of preferably at least 50% or more, more preferably 70% or more, even more preferably 90% or more, and particularly preferably 100%.

The covering ratio of the second layer is a value obtained by the measurement method described in Examples below.

The covering ratio of the second layer of being in the above range implies that the percentage of the surface covered by the second layer is larger than the percentage of the exposed surface of the first layer, and the light releasability of the second layer can be sufficiently exhibited, thereby obtaining stable releasability and light releasability against silicone adhesives.

The state where the second layer covers 50% or more of the surface of the underlying layer encompasses the state where no cissing occurs and the second layer is evenly coated over the entire surface when the surface of the second layer is observed using a microscope (see FIG. 1), as well as the state where, although the second layer partially has cissing on the surface of the underlying layer and has a mesh-shape, ball-shape, or island-shape, most of the layer remains as a film. On the other hand, it does not encompass the state where less than 50% of the surface of the underlying layer is covered, such as the state where some areas of not coating the second layer due to cissing are observed and most of the coated areas are mesh-shaped, ball-shaped, or island-shaped (see FIGS. 2 to 5) .

To increase the covering ratio of the second layer, for example, the normal-state releasing force of the first layer, which is the underlying layer, can be made heavier (higher), or the second layer can be blended with a fluorine atom-free material having a siloxane bond, as described below. However, it is not limited to these methods.

The upper limit of the covering ratio of the second layer is preferably an area ratio of 99% or less, and even more preferably an area ratio of 98% or less, depending on the method of use.

When the second layer and the silicone adhesive layer come into contact with each other, it is sufficient for the present release film to secure an effective coating width (width that allows product collection) at the time of product collection, and the covering ratio of the second layer may not necessarily be 100%. Since the releasing force is heavier in the area where the second layer is not coated (the first layer is exposed), a difference in releasing force between the coated area and the uncoated area can be provided on the entire surface of the second layer. By utilizing the difference in releasing force, it is also possible to cleanly release the edge portion of the silicone adhesive layer.

<Substrate>

The material of the substrate in the present release film is not particularly limited as long as it has a film shape. For example, it may be made of paper, resin, metal, or the like. Among these, it is preferably made of resin from the viewpoint of mechanical strength and flexibility.

Examples of the substrate made of resin include a film obtained by forming a polymer, such as polyethylene, polypropylene, polyester, polystyrene, polycarbonate, polyether sulfone, polyamide, or polyimide, into a film shape. It can also be a mixture of these materials (polymer blend) or a composite of the constituting units (copolymer), as long as it can be formed into a film shape.

Among the films exemplified above, a polyester film is particularly preferred since it has excellent physical properties such as heat resistance, flatness, optical properties, and strength.

The polyester film may be a single layer or a multilayer film (laminated film) having two or more layers with different properties.

The polyester film may be an unstretched film (sheet) or a stretched film. Among them, a stretched film that is stretched in the uniaxial direction or the biaxial directions is preferred. Among them, a biaxially stretched film is more preferred from the viewpoint of balance of mechanical properties and flatness.

The polyester, which is the main component resin of the polyester film, may be a homopolyester or a copolymerized polyester.

Here, the main component resin means the resin having the largest mass ratio among the resins constituting the present polyester film, and is assumed to occupy 50% by mass or more, 75% by mass or more, 90% by mass or more, or 100% by mass of the resins constituting the present polyester film.

The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid, and examples of the aliphatic glycol include ethylene glycol, diethylene glycol, 1,4-butanediol, and 1,4-cyclohexanedimethanol.

Typical examples of the homopolyester include polyethylene terephthalate (PET) and polybutylene terephthalate (PBT).

Meanwhile, when the polyester is a copolymerized polyester, it is preferably a copolymer containing a third component in 30 mol% or less.

Examples of the dicarboxylic acid component of the copolymerized polyester include one or more types of isophthalic acid, phthalic acid, terephthalic acid, 2,6-naphthalenedicarboxylic acid, adipic acid, and sebacic acid; and examples of the glycol component thereof include one or more types of ethylene glycol, diethylene glycol, propylene glycol, 1,4-butanediol, 1,4-cyclohexanedimethanol, and neopentyl glycol.

Among them, for the substrate in the present release film, polyethylene terephthalate having an ethylene terephthalate unit in 60 mol% or more, preferably in 80 mol% or more, is preferred.

The substrate in the present release film can also be blended with particles for the main purpose of imparting slipperiness and preventing scratches in each production process.

In the case of blending particles, the type of particles to be blended is not particularly limited as long as the particles are capable of imparting slipperiness; and examples thereof include inorganic particles such as silica, calcium carbonate, magnesium carbonate, barium carbonate, calcium sulfate, calcium phosphate, magnesium phosphate, kaolin, aluminum oxide, and titanium oxide, and organic particles such as acrylic resin, styrene resin, urea resin, phenol resin, epoxy resin, and benzoguanamine resin. In addition, precipitated particles in which a part of a metal compound such as a catalyst is precipitated and finely dispersed can also be used during the polyester production process.

The shape of the particles to be used is not particularly limited, and may be any of spherical shape, aggregated shape, rod shape, flat shape, and the like. Further, the hardness, specific gravity, color, and the like are not particularly limited. Two or more types of these series of particles may be used in combination if necessary.

The average particle diameter of the particles to be used is preferably 5 μm or less, and more preferably in a range of 0.1 to 3 μm. By using particles having an average particle size in the above range, an appropriate surface roughness can be given to the film, and good slipperiness and smoothness can be ensured.

The particle content in the substrate is preferably 5% by mass or less, and more preferably in a range of 0.0003% by mass to 3% by mass. From the viewpoint of obtaining slipperiness, it is preferable to blend particles in the coating layer since the slipperiness can be improved. On the other hand, when there are no or few particles to be blended, a preferable film having high transparency can be obtained.

<First Layer>

The first layer is formed from a silicone composition containing a fluorine atom-free curable silicone as a main component.

Here, the term "fluorine atom-free" means containing no fluorine atoms in the chemical structure of the silicone.

The term "main component" means the component having the largest mass ratio among the constituent components of the silicone composition forming the first layer.

(Fluorine Atom-Free Silicone)

The "fluorine atom-free curable silicone" that is the main component of the silicone composition forming the first layer includes a curable non-fluorinated silicone, and may be a solvent-type, a solvent-free-type, an aqueous-based, or a mixture of these.

Among them, from the viewpoint of adhesion between the film-shaped substrate and the first layer, or between the first layer and the second layer described later, it is preferably a curable silicone having heavy releasability (high releasing force), and more preferably a solvent-type curable silicone or an aqueous-based curable silicone.

The solvent-free-type curable silicone is a silicone having a viscosity capable of being coated without being diluted with a solvent, and is a silicone having a short polysiloxane chain and a relatively low molecular weight.

The viscosity of the solvent-free-type curable silicone, when used alone, is preferably 1,000 mPa·s or less, more preferably 50 mPa·s or more or 900 mPa·s or less, and even more preferably 80 mPa·s or more or 800 mPa·s or less.

Meanwhile, the solvent-type curable silicone is a silicone having a high viscosity not capable of being coated

unless being diluted with a solvent, and is a silicone having a relatively high molecular weight.

The viscosity of the solvent-type curable silicone, when formed into a 30% toluene solution, is preferably 1,000 mPa·s or more, more preferably 2,000 mPa·s or more or 20,000 mPa·s or less, and even more preferably 3,000 mPa·s or more or 18,000 mPa·s or less. The high viscosity of the solvent-type curable silicone enables the adhesion between the first layer and the other layer to be sufficiently high.

Specific examples of the "curable non-fluorinated silicone" that is the main component of the silicone composition forming the first layer include KNS-3051, KNS-320A, KNS-316, KNS-3002, KNS-3300, X-62-1387, KS-837, X-62-2829, KS-3650, KS-847, KS-847T, KS-776L, KS-776A, KS-774, KS-3703T, KS-3601, KS-830E, X-62-2825, X-62-9201-A, X-62-9201B, KM3951, KM-768, X-52-6015, KF-2005, X-62- 7205, X-62-7028-A, X-62-7028-B, X-62-7052, X-62-7622, X-62-7660, and X-62-7655, manufactured by Shin-Etsu Chemical Co., Ltd.; and SP7017, SP7015, SP7025, SP7031, LTC1006L, LTC1063L, LTC1036M, LTC1056L, SRX357, SRX211, SRX345, SRX370, LTC300B, LTC310, LTC355A, LTC759, LTC755, LTC750A, LTC752, LTC761, LTC856, and LTC851, manufactured by Toray Dow Corning Co., Ltd.

Among the above, it is particularly preferable for the "fluorine atom-free curable silicone" that is the main component of the silicone composition forming the first layer to use a curable non-fluorinated silicone having high (heavy) releasing force or a coating liquid composition thereof.

Examples of the curable non-fluorinated silicone having high (heavy) releasing force include those in which a reactive substituted group, such as a vinyl group, a SiH group, an epoxy group, an amino group, a carboxyl group, a carbinol group, a methacryl group, a mercapto group, or a phenol group, is designed to remain in large numbers after curing.

Examples thereof also include those containing a substituted group that increases the releasing force and improves the affinity with other resins on the side chain of the polysiloxane skeleton, such as an alkyl group, a phenyl group, an aralkyl group, and a polyether group each having two or more carbon atoms. With these substituted groups, the wettability of the second layer can be improved and the covering ratio can be increased.

Specific examples of the curable non-fluorinated silicone having high (heavy) releasing force include KNS-316, KNS-3002, KNS-3300, X-62-1387, KS-776L, KS-776A, KS-774, KS-3703T, KS-3601, KS-830E, X-62-2825, X- 62-9201-A, X-62-9201B, KM-768, X-52-6015, KF-2005, X-62-7205, X-62-7660, and X-62-7655, manufactured by Shin-Etsu Chemical Co., Ltd.; and SP7025, SP7031, LTC1056L, SRX345, SRX370, LTC355A, LTC752, and LTC851, manufactured by Toray Dow Corning Co., Ltd.

The above-mentioned curable non-fluorinated silicone may also be added with a heavy releasing additive, and examples thereof include KS-3800 manufactured by Shin-Etsu Chemical Co., Ltd.; and SD7292 and BY24-4980, manufactured by Toray Dow Corning Co., Ltd.

The above-mentioned curable non-fluorinated silicone may be used alone, or in a mixture of two or more types having different reactive functional groups and viscosities. By mixing two or more types of curable non-fluorinated silicones, the curing reaction can be adjusted, the viscosity of the coating liquid in the first layer can be adjusted, and the wettability and reactivity of the second layer can be enhanced. In so doing, the solvent-free-type silicones may be mixed with each other, the solvent-type silicones may be mixed with each other, or the solvent-free-type silicone may be mixed with the solvent-type silicone. In particular, when the film thickness of the first layer is increased in order to obtain a release film that can be lightly released, the solid content concentration of the coating liquid forming the first layer tends to be high. This may cause the viscosity of the coating liquid to increase, resulting in deterioration of the coating appearance and large thickness unevenness. Thus, by mixing the solvent-free-type silicone and the solvent-type silicone, the viscosity of the coating liquid can be lowered to form a first layer having good coating appearance and small thickness unevenness.

(Aqueous-Based Curable Non-Fluorinated Silicone)

The aqueous-based curable non-fluorinated silicone is a curable non-fluorinated silicone that can be mixed with water to form an aqueous-based silicone resin emulsion.

Examples of such an aqueous-based curable non-fluorinated silicone include dialkyl polysiloxane containing pendent and terminal vinyl groups containing platinum or tin catalysts (referred to as "alkyl vinyl polysiloxane"), and alkyl hydrogen polysiloxane.

The alkyl vinyl polysiloxane can be pre-mixed in water to form an aqueous-based silicone resin emulsion, and the aqueous-based silicone resin emulsion can be closely mixed with a pre-hydrolyzed glycidoxysilane to form an aqueous-based coating composition.

The alkyl vinyl polysiloxane containing pendent and terminal vinyl groups can be represented by the following formula 1.

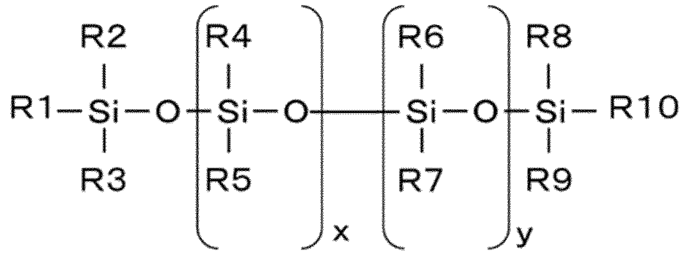

(formula 1)

In the formula 1, R2, R3, R4, R5, R6, R8, and R9 represent the same or different alkyl groups (preferably methyl groups) or phenyl groups having 1 to 6 carbon atoms; R1, R7, and R10 represent the same or different alkenyl groups, alkyl groups (preferably methyl groups), or phenyl groups having 2 to 6 carbon atoms; and x is a number of at least 1,000 and y is a number of 1 to 50.

The above-mentioned platinum may be any known platinum, and the amount thereof may be usually the amount required to act as a catalyst in the form of a complex, that is, the amount of catalyst for adding hydrogen of a crosslinking agent to the vinyl groups of the alkyl vinyl polysiloxane. In other words, the amount is 0.5 ppm or more, preferably 5 ppm or more, more preferably 10 ppm or more, and even more preferably 20 ppm or more. The upper limit is 200 ppm or less, preferably 150 ppm or less, and more preferably 100 ppm or less.

Examples of the product of the alkyl vinyl polysiloxane include commercially available products manufactured, for example, by Wacker Asahikasei Silicone, Dow Corning, Rhone-Poulenc, and the like.

Among the alkyl vinyl polysiloxanes, methyl vinyl polysiloxane or methylhexenyl polysiloxane is preferred.

In the methyl vinyl polysiloxane, the vinyl content of the alkyl vinyl polysiloxane represented by the formula 1 is approximately 0.2 to 10 mol% including the pendent (R7) and terminal (R1 and R10) vinyl groups. The preferred vinyl content is approximately 0.2 to 0.5 mol% of the total composition.

The above-mentioned alkyl hydrogen polysiloxane can be represented by the following formula 2.

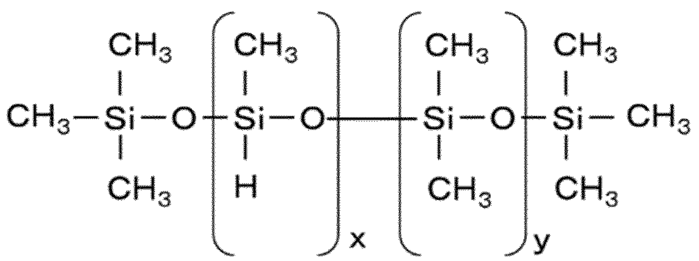

(formula 2)

In the formula 2, x is a number of at least 1,000 and y is a number of 10 to 1,000.

In order to improve the chemical resistance of the coating, the alkyl hydrogen polysiloxane contains hydrogen preferably in at least 0.7 mol%, more preferably in 0.7 to 3 mol%, and even more preferably in 1.5 mol% or more or 2 mol% or less. When the hydrogen content is less than 0.7 mol%, the reactivity tends to decrease in the silicone layer forming process.

When using the aqueous-based curable non-fluorinated silicone to form a silicone composition, the solid content concentration thereof is preferably 3 to 30% by mass, more preferably 5 to 30% by mass, and even more preferably 10 to 30% by mass.

In this case, the solid content in the silicone layer composition includes all components (alkyl vinyl polysiloxane and alkyl hydrogen polysiloxane). The amount of the alkyl vinyl polyloxane containing vinyl groups is preferably 90 to 98% by mass, more preferably 90 to 96% by mass, and even more preferably 90 to 95% by mass, per solid content mass.

Meanwhile, the amount of the alkyl hydrogen polysiloxane is preferably 1 to 5% by mass, more preferably 2 to 5% by mass, and even more preferably 2 to 4% by mass, per solid content mass.

The amount ratio (mass ratio) of the crosslinking agent amount to the alkyl vinyl polysiloxane amount is preferably set such that the molar ratio of hydrogen to vinyl in the silicone composition is higher, since the reactivity becomes good. This ratio is 3 or more, preferably 4 or more.

When using the aqueous-based curable non-fluorinated silicone to form a silicone layer, the thickness thereof (after drying) is preferably 0.01 to 3 $g/m^2$, more preferably 0.01 to 2 $g/m^2$, even more preferably 0.01 to 1 $g/m^2$, and particularly preferably 0.01 to 0.5 $g/m^2$.

(Curable Silicone Having Diphenyl Group)

Among the above-mentioned fluorine atom-free curable silicones, it is preferable for the first layer to have a diphenyl group from the viewpoint of modifying the wettability of the surface of the first layer. In other words, it is preferable to have a diphenyl structure.

For example, it is preferable to form the first layer from a silicone composition containing a curable silicone having a diphenyl group as a main component.

Examples of the curable silicone having a diphenyl group include KS-774, KS-3703T, X-62-2825, X-62-9201B, X-62-2808, X-62-5427, and X-62-5039, manufactured by Shin-Etsu Chemical Co., Ltd.; and LTC303E and LTC300B, manufactured by Dow Toray Co., Ltd.

(Fluorine Atom Content)

The first layer preferably has a fluorine atom content (atomic number fraction) of 50 ppm or less, more preferably 40 ppm or less, and even more preferably 30 ppm or less. Among them, it is particularly preferable to contain substantially no fluorine atoms (including 0 ppm).

For example, within the range where the fluorine atom content of the first layer does not exceed 50 ppm, a very small amount of a surfactant having a fluorine-substituted group can be added to the first layer for the purpose of improving the appearance of coating, or a very small amount of fluorine can be treated on the surface of the first layer by a short-time CF4 plasma treatment or the like for the purpose of improving the wettability to the second layer. These arrangements do not deviate from the gist of the present invention, which is to reduce the amount of fluorine in the release film, and can be regarded as one of the preferred embodiments.

Here, the phrase "contain substantially no fluorine atoms" means intentionally containing no fluorine atoms in the first layer. For example, when the first layer contains fluorine atoms as a result of fluorine-containing compounds in the other layers migrating into the first layer, it corresponds to the case where the first layer contains substantially no fluorine atoms.

(Other Components)

The first layer may optionally contain other components. Examples of the other components include resins such as silicones other than curable silicones, silicone rubbers, silicone resins, polyolefin resins, acrylic resins, urethane resins, epoxy resins, alkyd resins, and cellulose; copolymers of these resins modified by graft polymerization; various particles such as silica particles, alumina particles, silicone rubber particles, silicone resin particles, and silicone rubber-resin composite particles; and silane coupling agents.

In addition, the first layer may optionally contain, for example, a light release agent, a heavy release agent, a crosslinking agent, a curing retarder, and an adhesion improver.

Specific examples of the light release agent, the heavy release agent, the crosslinking agent, the curing retarder, and the adhesion improver include KS-3800 and X-92-185, manufactured by Shin-Etsu Chemical Co., Ltd.; and BY24-850, SD7292, BY24-4980, SP7297, BY24-808, and SD7200, manufactured by Toray Dow Corning Co., Ltd.

(Film Thickness of First Layer)

The film thickness of the first layer is not limited. When the film thickness of the first layer is thick, it tends to be desirable since it is difficult for the release surface of the present release film to be affected by the substrate, for example, the hardness of the substrate. Also, when the film thickness of the first layer is thick, the film thickness of the second layer can be reduced, and the fluorine atom content of the entire present release film can be reduced. On the other hand, when the film thickness of the first layer is too thick, blocking tends to occur easily, and the appearance of coating tends to deteriorate. For these reasons, the solid content mass of the first layer to be coated and formed on the film is preferably 0.01 to 10 $g/m^2$, more preferably 0.05 $g/m^2$ or more or 5 $g/m^2$ or less, and even more preferably 0.10 $g/m^2$ or more or 2 $g/m^2$ or less.

(Normal-State Releasing Force of First Layer)

The first layer preferably has a normal-state releasing force of 12 mN/cm or more.

When the normal-state releasing force of the first layer is heavy (high), the adhesion between the first layer and the second layer is improved, and the covering ratio of the second layer is increased, so that the normal-state releasing force of the second layer, and also the normal-state releasing force of the present release film, can be lowered. This configuration reduces the amount of force required for releasing from the silicone adhesive, and defects such as

releasing failure and adhesive layer deformation in the production process can be suppressed.

From such a viewpoint, the normal-state releasing force of the first layer is more preferably 21 mN/cm or more, even more preferably 40 mN/cm or more, and further preferably 100 mN/cm or more. The upper limit is not particularly limited, but is preferably 3,000 mN/cm or less.

The normal-state releasing force of the first layer can be measured as in Examples described later.

(Wettability of First Layer)

The water contact angle can be used as an index expressing the wettability of the first layer.

The water contact angle of the first layer is preferably 90 degrees or more, more preferably 95 degrees or more, and even more preferably 100 degrees or more. When the water contact angle of the first layer is 90 degrees or more, that is, the surface of the first layer is water repellent, the second layer described later can be uniformly coated thereon and has a sufficient covering ratio. The upper limit is not particularly limited, but is usually 160 degrees or less, preferably 150 degrees or less, and more preferably 140 degrees or less.

The water contact angle in the above range can be achieved by using a fluorine atom-free curable silicone, which is a component of the first layer, and the water contact angle can be adjusted by the reactive substituted groups contained in the curable silicone.

The water contact angle of the first layer is obtained by measuring the water contact angle immediately after dropping pure water on the surface of the first layer using a contact angle meter under an environment of 23°C. The value calculated by the $\theta/2$ method is used as the measured value, and the measurement is performed 5 times to determine the average value.

(Elastic Modulus of First Layer)

The elastic modulus of the first layer is an index expressing the effect of improving the wettability in coating the second layer.

From such a viewpoint, the first layer has an elastic modulus (F1), as measured using a nanoindenter, of 0.10 GPa or more, preferably 0.16 GPa or more, more preferably 0.18 GPa or more, and even more preferably 0.20 GPa or more.

As specific means of satisfying the above conditions, it is preferable to introduce a diphenyl group in the first layer. Specifically, it is preferable to form the first layer from a silicone composition containing a curable silicone having a diphenyl group, as a main component.

Thus, by forming the first layer so as to have a diphenyl structure, the wettability of the first layer surface can be modified, and the wettability in coating the second layer can be improved.

The elastic modulus measured using a nanoindenter is a value calculated from the load-displacement curve obtained by pressing the indenter into the surface of the first layer coated on the PET film substrate to a certain depth. The specific measurement method is as follows.

Measurement apparatus: TI950 Tribo Indenter (Hysitron, Inc.)
Terminal used: Berkovich (triangular cone-type)
Measurement method: Single press measurement
Pressing depth: 50 nm
Loading speed: 10 nm/sec
Temperature conditions: Room temperature

<Second Layer>

The second layer contains a component having a fluorine-substituted group. Here, the term "fluorine-substituted group" refers to a substituted group containing fluorine atoms.

The substituted group containing fluorine atoms (fluorine-substituted group) is not particularly limited as long as the substituted group contains fluorine atoms. Specific examples thereof include a fluorine group, a trifluoromethyl group, a pentafluoroethyl group, a 2,2-trifluoroethyl group, a 1H,1H-heptafluorobutyl group, a 2H-hexafluoroisopropyl group, and a perfluoro-t-butyl group.

Examples of the component having a fluorine-substituted group include a resin containing a fluorine-substituted group in the side chain portion of the resin skeleton.

Examples of the resin containing a fluorine-substituted group include a silicone having a fluorine-substituted group, a fluorine-containing hydrocarbon resin such as polytetrafluoroethylene, and various other fluorinated resins. Among them, a curable silicone having a fluorine-substituted group is preferred from the viewpoint of releasability.

Specific examples thereof include KP-911, X-70-201S, and X-41-3035, manufactured by Shin-Etsu Chemical Co., Ltd.; FS1265-300CS, FS1265-1000CS, FS1265-10000CS, BY24-900, BY24-903, 3062, and Q2-7785, manufactured by Toray Dow Corning Co., Ltd.; and CYTOP TM manufactured by AGC Inc. Among them, a curable silicone having a fluorine-substituted group is particularly preferred from the viewpoint of obtaining stable light releasability against the silicone adhesive.

(Curable Silicone)

The main component of the second layer is preferably a component formed from a curable silicone having a fluorine-substituted group.
The curable silicone having a fluorine-substituted group may be a solvent-type, a solvent-free-type, or a mixture of these. The solvent-type curable silicone and the solvent-free-type curable silicone are as described above, and the respective preferred viscosity ranges are also the same as those described above.
The curable silicone of the "component formed from a curable silicone having a fluorine-substituted group" that forms the main component of the second layer may be used as a mixture of a curable fluorinated silicone and the above-mentioned curable non-fluorinated silicone. In that case, it is preferable to increase the amount of the fluorinated silicone than that of the non-fluorinated silicone. The main component of the second layer refers to the material that is most largely included in the second layer.
The silicone having a fluorine-substituted group is a resin having fluorine atoms in the side chain portion of the resin skeleton.
The fluorine atom content (atomic number fraction) of the silicone having a fluorine-substituted group is generally several thousand ppm (less than 1% of the total number of atoms in the silicone having a fluorine-substituted group) to several hundred thousand ppm (several tens of percent of the total number of atoms in the silicone having a fluorine-substituted group).
Examples of the curable silicone having a fluorine-substituted group include KP-911, X-70-201S, and X-41-3035, manufactured by Shin-Etsu Chemical Co., Ltd.; and FS1265-300CS, FS1265-1000CS, FS1265-10000CS, BY24-900, BY24-903, 3062, and Q2-7785, manufactured by Toray Dow Corning Co., Ltd.
The curable silicone having a fluorine-substituted group may be used alone, or in a mixture of two or more types thereof.

(Siloxane)

The second layer may contain a fluorine atom-free material having a siloxane bond, that is, a fluorine atom-free siloxane, from the viewpoint of increasing the covering ratio of the second layer.
Examples of the fluorine atom-free material having a siloxane bond include the above-mentioned curable non-fluorinated silicones, non-curable non-fluorinated silicones, curable/non-curable silicone resins, silicone rubbers, silane coupling agents, disiloxane, 1,1,3,3-tetramethyldisiloxane, hexamethyldisiloxane, light release agents, heavy release agents, crosslinking agents, curing retarders, and adhesion improvers. Only one type of these may be added to the second layer, or two or more types may be added.
The content of the fluorine atom-free material having a siloxane bond in the second layer can be an amount that allows the effect to be enjoyed. On the other hand, from the viewpoint of preventing heavy releasing and bleeding out due to the addition of an excessive amount, the second layer preferably contains the fluorine atom-free material having a siloxane bond at a ratio of 0.001 to 99.0% by mass, more preferably 0.005% by mass or more or 90.0% by mass or less, and even more preferably 0.01% by mass or more or 50.0% by mass or less.

(Other Components)

The second layer contains a material containing fluorine atoms as a main component, and may contain other materials as needed.
For example, the second layer may contain a non-curable non-fluorinated silicone, a fluorine atom-free silicone, or a resin other than the fluorine atom-free silicone.
In addition to the silicones, the second layer may contain an olefin resin, an acrylic resin, an urethane resin, an epoxy resin, an alkyd resin, copolymers obtained by modifying these resins by graft polymerization, silica particles, alumina particles, silicone rubber particles, silicone resin particles, silicone rubber-resin composite particles, a silane coupling agent, and the like.

(Fluorine Atom Content)

The second layer preferably has a fluorine atom content (atomic number fraction) of 500 ppm or more and 900,000 ppm or less, more preferably 1,000 ppm or more or 700,000 ppm or less, and even more preferably 3,000 ppm or more or 500,000 ppm or less, from the viewpoint of obtaining stable preferred light releasability against the silicone adhesive.

(Film Thickness of Second Layer)

When the film thickness of the second layer is thin, the amount of fluorine atoms contained in the present release film can be reduced. On the other hand, when the film thickness of the second layer is too thin, not only the production becomes difficult, but also the ratio of the second layer covering the underlying layer may be insufficient.

For these reasons, the solid content mass of the second layer to be coated and formed on the film is preferably 0.001 to 5 g/$m^2$, more preferably 0.005 g/$m^2$ or more or 3 g/$m^2$ or less, even more preferably 0.01 g/$m^2$ or more or 1 g/$m^2$ or less, and particularly preferably 0.01 g/$m^2$ or more or 0.14 g/$m^2$ or less.

As described above, the second layer in the present release film does not need to cover the entire surface of the underlying layer, and the film thickness means a substantial average thickness including the uncoated areas. That is, it corresponds to the value obtained by dividing the solid content mass of the second layer by the area of the release film.

In regard to the relationship between the film thicknesses of the first layer and the second layer, it is preferable that the film thickness of the second layer is smaller than that of the first layer. When the film thickness of the second layer is thin, the amount of fluorine atoms contained in the present release film can be reduced. However, when the film thickness of the second layer is too thin, not only the production becomes difficult, but also the ratio of the second layer covering the underlying layer may be insufficient.

From such a viewpoint, the film thickness of the second layer is preferably 300% or less, more preferably 100% or less, and even more preferably 50% or less of the film thickness of the first layer. In addition, the film thickness of the second layer is preferably 0.1% or more, more preferably 1% or more, and even more preferably 2% or more of the film thickness of the first layer.

(Normal-State Releasing Force of Second Layer)

The second layer preferably has a normal-state releasing force of 100 mN/cm or less.

The lower the normal-state releasing force of the second layer, the smaller the force required for releasing from the silicone adhesive, and defects such as releasing failure and adhesive layer deformation in the production process can be thus suppressed. Also, in a double-sided adhesive tape having release films on both sides of the adhesive sheet, the use of the release film having excellent light releasability enables a phenomenon of the release film releasing on the unintended side to be prevented.

From such a viewpoint, the normal-state releasing force of the second layer is preferably 100 mN/cm or less, more preferably 80 mN/cm or less, and even more preferably 50 mN/cm or less. The lower limit is not particularly limited, but is preferably 1 mN/cm or more, and more preferably 3 mN/cm or more, from the viewpoint of long-term storage of a laminated body in which the release film and the adhesive are laminated.

As described above, the second layer in the present release film does not need to cover the entire surface of the underlying layer. Here, the normal-state releasing force of the second layer in the present release film means the normal-state releasing force of the surface constituting the second layer, and is calculated as a value including the area not covered by the second layer.

In the case where the present release film has other arbitrary layers on the surface of the second layer or is subjected to some treatment, the "normal-state releasing force of the second layer" can be read as "normal-state releasing force of the surface of the present release film".

The second layer containing fluorine atoms may be formed by a plurality of (for example, twice) coating steps. For example, a layer containing fluorine atoms and having excellent wettability and adhesion to the first layer is coated and formed on the first layer not containing fluorine, and then a coating layer that is inferior in wettability and adhesion to the first layer and has excellent light releasability is formed thereon, thereby obtaining a release film having excellent adhesion and light releasability.

Methods to reduce the normal-state releasing force of the second layer include increasing the covering ratio of the second layer to the underlying layer, increasing the thickness of the entire release layer containing the first layer, and using a fluorinated silicone having excellent light releasability in the second layer.

The normal-state releasing force of the second layer can be measured as in Examples described later.

(High-Speed Releasing Force of Second layer)

The second layer preferably has a releasing force under a releasing speed of 30 m/min (high-speed releasing force) of 300 mN/cm or less.
The lower the high-speed releasing force of the second layer, the smaller the force required for releasing from the silicone adhesive as the speed is increased in the production process, and defects such as releasing failure and adhesive layer deformation in the production process can be thus suppressed.
From such a viewpoint, the high-speed releasing force of the second layer is preferably 300 mN/cm or less, more preferably 250 mN/cm or less, even more preferably 210 mN/cm or less, and particularly preferably 180 mN/cm or less.
In order for the second layer to obtain such a high-speed releasing force, it is preferable to increase the total film thickness of the first layer to the second layer, and in particular, it is preferable that the film thickness of the first layer is increased and the film thickness of the second layer is as thin as possible to the extent that curing defects and coating defects do not occur. However, it is not limited to such methods.

(Elastic Modulus of Second Layer)

The elastic modulus of the second layer is an index expressing the effect of suppressing an increase in releasing force during high-speed releasing.
The larger the elastic modulus of the second layer, the smaller the force required for releasing from the silicone adhesive as the speed is increased in the production process, and defects such as releasing failure and adhesive layer deformation in the production process can be thus suppressed.
From such a viewpoint, the second layer preferably has an elastic modulus (F2), as measured using a nanoindenter, of 0.40 GPa or more, more preferably 1.00 GPa or more, even more preferably 2.00 GPa or more, and particularly preferably 3.00 GPa or more.

(Relationship Between Elastic Moduli of First Layer and Second Layer)

The elastic modulus (F1) of the first layer and the elastic modulus (F2) of the second layer, as measured using a nanoindenter, satisfy the following relationship, from the viewpoint of achieving both the wettability of the first layer and the light releasability at high speed of the second layer:

preferably F1 + 0.4 GPa $\leq$ F2;
more preferably F1 + 1.0 GPa $\leq$ F2;
even more preferably F1 + 2.0 GPa $\leq$ F2; and
still more preferably F1 + 3.0 GPa $\leq$ F2.

<Laminated Structure>

The present release film may have a structure provided with a first layer on one or both sides of a film-shaped substrate and a second layer on the upper side of the first layer, and may have other layers interposed between the film-shaped substrate and the first layer, or between the first layer and the second layer, as described above.
Examples of the other layers include a crosslinking resin layer. Specific examples of the crosslinking resin layer include an anchor coat layer for enhancing adhesion between the film-shaped substrate and the first layer, an antistatic layer having antistatic properties, and an oligomer sealing layer for sealing a compound or oligomer exudation (bleeding, plate-out) onto the film surface.

(Anchor Coat Layer)

Examples of the anchor coat layer include those containing a polymer material such as polyethylene, polypropylene, a styrene-based copolymer, polyester, polyurethane, polyvinyl alcohol, polyethyleneimine, polyacrylate, polymethacrylate, and modified products thereof.

(Oligomer Sealing Layer)

The oligomer sealing layer preferably contains hydrolyzable alkoxysilicate and/or polycondensation products thereof. Examples of the hydrolyzable alkoxysilicate include those having a structure represented by a general formula of $Si(OR^1)_4$ (wherein $R^1$ represents a hydrocarbon group having 1 to 10 carbon atoms).

The oligomer sealing layer may further contain inorganic particles, and examples of the inorganic particles include silica, alumina, kaolin, calcium carbonate, titanium oxide, and barium salt.
The oligomer sealing layer may also contain an antifoaming agent, a coatability improving agent, a thickener, an organic lubricant, organic polymer particles, an antioxidant, an ultraviolet absorber, a foaming agent, a dye, and the like.

(Antistatic Layer)

The antistatic layer serving as the crosslinking resin layer is preferably formed from a crosslinking resin composition containing a conductive polymer (A) and a binder polymer (B), and optionally a crosslinking agent (C), particles, and other components, from the viewpoint of imparting antistatic properties.
The crosslinking resin composition may contain other components as long as the gist of the present invention is not impaired.

[Conductive Polymer (A)]

The conductive polymer (A) preferably contains polythiophene and its derivative (I), which are specifically represented by the following formula 3.

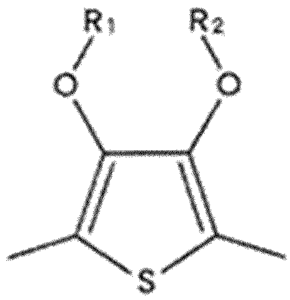

(formula 3)

In the formula 3, R1 and R2 each independently represent a hydrogen element, an aliphatic hydrocarbon group having 1 to 12 carbon atoms, an alicyclic hydrocarbon group, or an aromatic hydrocarbon group, such as a methyl group, an ethyl group, a propyl group, an isopropyl group, a butyl group, a cyclohexylene group, or a benzene group.

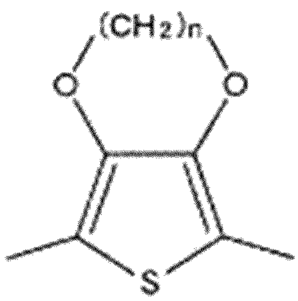

(formula 4)

In the formula 4, n is an integer of 1 to 4.
In the coating film, it is preferable to use polythiophene having a structural formula represented by the formula 4 or polythiophene derivatives. For example, compounds having n = 1 (methylene group), n = 2 (ethylene group), or n = 3 (propylene group) in the formula 4 are preferred. Among them, a compound having an ethylene group of n = 2, that is, poly-3,4-ethylenedioxythiophene is particularly preferred. Examples of the polythiophene or polythiophene derivatives include compounds having functional groups bonded to the third and fourth positions of the thiophene ring. As described above, a compound having oxygen atoms bonded to carbon atoms at the third and fourth positions is preferred. For a compound having a structure having carbon atoms or hydrogen atoms directly bonded to the carbon atoms, it may not be easy to make the coating liquid water-based.
The crosslinking resin layer preferably contains a composition composed of the polythiophene and a polyanion, or a composition composed of the polythiophene derivatives and a polyanion.
The polyanion refers to an "acidic polymer in a free acid state", and is preferably a polymer carboxylic acid, a polymer sulfonic acid, a polyvinyl sulfonic acid, or the like. Specific examples of the polymer carboxylic acid include a polyacrylic acid, a polymethacrylic acid, and a polymaleic acid. Specific examples of the polymer sulfonic acid include

a polystyrene sulfonic acid. Among them, a polystyrene sulfonic acid is most preferred in terms of conductivity. In addition, it may use a salt form in which a part of the free acid is neutralized. It can be considered that by using these polyanions during polymerization, the polythiophene compound, which is originally insoluble in water, can be easily dispersed in water or made water-based, and its function as an acid also serves as a doping agent for the polythiophene compound.

The polymer carboxylic acid and the polymer sulfonic acid can also be used in the form of being copolymerized with other copolymerizable monomers such as acrylic acid ester, methacrylic acid ester, and styrene. The molecular weight of the polymer carboxylic acid or the polymer sulfonic acid used as the polyanion is not particularly limited, but from the viewpoint of stability and conductivity of the coating agent, the mass average molecular weight thereof is preferably 1,000 to 1,000,000, and more preferably 5,000 to 150,000. Lithium salts, alkali salts such as sodium salts, ammonium salts, and the like may be partially contained as long as the characteristics of the present invention are not impaired. Even in the case of neutralized salts, the equilibrium of the polystyrene sulfonic acid and ammonium salts, which function as very strong acids, is known to shift to the acidic side due to the progress of the equilibrium reaction after neutralization, which can be considered to act as a dopant.

The content of the polyanion is preferably in excess of that of the polythiophene or polythiophene derivatives in terms of solid content mass ratio from the viewpoint of conductivity, and is preferably 1 to 5 parts by mass, and more preferably 1 to 3 parts by mass, relative to 1 part by mass of the polythiophene or polythiophene derivatives. The composition composed of the polythiophene or polythiophene derivatives and the polyanion is exemplified in Japanese Patent Laid-Open No. H06-295016, Japanese Patent Laid-Open No. H07-292081, Japanese Patent Laid-Open No. H01-313521, Japanese Patent Laid-Open No. 2000-006324, European Patent No. EP602731, US Patent No. US5391472, and the like. However, other than these may be used. As an example, an alkali metal salt of 3,4-dihydroxythiophene-2,5-dicarboxy ester is used as a starting material to obtain 3,4-ethylenedioxythiophene, and then potassium peroxodisulfate, iron sulfate, and the previously obtained 3,4-ethylenedioxythiophene are introduced in and reacted with an aqueous polystyrene sulfonic acid solution, thereby obtaining a composition in which a polythiophene such as poly(3,4-ethylenedioxythiophene) is complexed with a polyanion such as a polystyrene sulfonic acid.

There is also an example described in "Latest Trends in Conductive Polymer Technology" (1st printing, June 1, 1999, published by Toray Research Center, Inc.).

[Binder Polymer (B)]

The binder polymer (B) constituting the crosslinking resin layer is defined as a polymer compound having a number average molecular weight (Mn) of 1,000 or more, as measured by gel permeation chromatography (GPC) according to the polymer compound safety evaluation flow scheme (sponsored by the Chemical Substances Council in November 1985), and having film-forming properties.

The binder polymer (B) constituting the crosslinking resin layer may be a thermosetting resin or a thermoplastic resin as long as it can be compatible with or mixed and dispersed with the conductive polymer (A). Examples thereof include polyesters such as polyethylene terephthalate, polybutylene terephthalate, and polyethylene naphthalate; polyimides such as polyimide and polyamideimide; polyamides such as polyamide 6, polyamide 6,6, polyamide 12, and polyamide 11; fluororesins such as polyvinylidene fluoride, polyvinyl fluoride, polytetrafluoroethylene, ethylene tetrafluoroethylene copolymer, and polychlorotrifluoroethylene; vinyl resins such as polyvinyl alcohol, polyvinyl ether, polyvinyl butyral, polyvinyl acetate, and polyvinyl chloride; epoxy resins; oxetane resins; xylene resins; aramid resins; polyimide silicones; polyurethanes; polyureas; melamine resins; phenol resins; polyethers; acrylic resins, and copolymers of these. These may be used singly or in combination of two or more types thereof.

The binder polymer (B) may be dissolved in an organic solvent as a raw material, may be made into an aqueous solution by adding a functional group such as a hydroxyl group, a sulfo group, or a carboxy group, or may be water-dispersed in combination with a surfactant. The binder polymer (B) may be used in combination with a crosslinking agent, a curing agent such as a polymerization initiator, a polymerization accelerator, a solvent, a viscosity modifier, and the like, if necessary.

Among the binder polymers (B), it is preferable to use one or more selected from a polyester resin, an acrylic resin, an urethane resin, and a vinyl resin from the viewpoint of adhesion to the release layer, and it is more preferable to use one or more selected from an acrylic resin and a vinyl resin from the viewpoint of compatibility with other coating agents at the time of preparing a coating liquid.

The content of the binder polymer (B) in the crosslinking resin composition is preferably 5 to 90% by mass, more preferably 10 to 70% by mass, and even more preferably 10 to 60% by mass, in terms of solid content mass ratio. When the content of the binder polymer (B) falls within the above range, the strength of the resulting crosslinking resin layer and the adhesion to the release layer can be sufficiently obtained.

[Crosslinking Agent (C)]

The crosslinking resin composition may contain a crosslinking agent (C).

The crosslinking agent mainly improves the cohesiveness, surface hardness, scratch resistance, solvent resistance, water resistance, and the like of the crosslinking resin layer by crosslinking reactions with functional groups contained in other resins or compounds, or by self-crosslinking.

The usage of containing the crosslinking agent (C) is more preferable, as in the usage of containing the binder polymer (B), since it has an improving effect described below.

The crosslinking agent (C) in the present invention is not particularly limited, and any type of crosslinking agent can be used. For example, melamine compounds, guanamine-based, alkylamide-based, and polyamide-based compounds, glyoxal-based, carbodiimide compounds, epoxy compounds, oxazoline compounds, aziridine compounds, isocyanate compounds, silane coupling agents, dialcohol aluminate-based coupling agents, dialdehyde compounds, zircoaluminate-based coupling agents, peroxides, heat- or photo-reactive vinyl compounds, photosensitive resins, or the like are suitable for use. Among them, it is preferable to use crosslinking agents or silane coupling agents composed of melamine compounds or epoxy compounds, from the viewpoint of synergistically obtaining good adhesion to the release layer.

These crosslinking agents also include polymer-type crosslinking reactive compounds having reactive groups in other polymer skeletons, and in the present invention, one or more of these crosslinking agents may be used in combination.

The content of the crosslinking agent (C) in the crosslinking resin composition is preferably 1 to 90% by mass, more preferably 3 to 50% by mass, and even more preferably 5 to 40% by mass, in terms of solid content mass ratio. When the ratio of the crosslinking agent (C) falls within the above range, adhesion to the release layer can be sufficiently obtained by synergistic action with the binder polymer (B).

[Particles]

The crosslinking resin layer may contain particles for the purpose of improving adhesiveness and slipperiness.

The average particle diameter of the particles is not particularly limited. For example, when used for optical applications, it is preferably 1.0 μm or less, more preferably 0.5 μm or less, and even more preferably 0.2 μm or less, from the viewpoint of film transparency. It is also preferably 0.01 μm or more from the viewpoint of improving adhesiveness and slipperiness of the crosslinking resin layer.

The average particle diameter of the particles can be measured by, for example, the method in Examples described later.

Specific examples of the particles include inert inorganic particles such as silica, alumina, calcium carbonate, and titanium dioxide, fine particles obtained from polystyrene-based resins, polyacrylic resins, and polyvinyl-based resins, and organic particles represented by crosslinked particles of these.

[Others]

The crosslinking resin layer may further contain a surfactant, a defoaming agent, a coatability improving agent, a mold release agent, a thickener, an organic lubricant, an antistatic agent, a conductive agent, an ultraviolet and other light absorber, an antioxidant, a foaming agent, a dye, a pigment, and the like, if necessary.

The components in the crosslinking resin layer can be analyzed by the method such as TOF-SIMS, ESCA, or fluorescent X-rays.

(Method for Forming Crosslinking Resin Layer)

The crosslinking resin layer may be formed by in-line coating in which the film surface is treated during the stretching process of the film-shaped substrate, or by offline coating in which the film once produced is coated outside the system. The in-line coating is preferably used since the coating can be performed at the same time as film forming, so that manufacturing can be handled inexpensively, and the thickness of the crosslinking resin layer can be changed depending on the stretching ratio.

The in-line coating is not limited to the following, but for example, in sequential biaxial stretching, a coating treatment can be applied particularly before the transverse stretching after the longitudinal stretching. When the crosslinking resin layer is formed on a polyester film by in-line coating, the coating can be performed at the same time as the film forming, and the crosslinking resin layer can be treated at a high temperature, so that a film suitable as a polyester film can be produced.

When the crosslinking resin layer is formed by in-line coating, the coating liquid is preferably coated on a

polyester film as an aqueous solution or an aqueous dispersion of the crosslinking resin composition containing the above-mentioned series of compounds. In addition, a small amount of organic solvent may be contained in the coating liquid for the purpose of improving dispersibility in water, film-forming properties, and the like, as long as the gist of the present invention is not impaired. The organic solvent may be used singly or in combination of two or more types thereof.

The content of the organic solvent in the coating liquid is preferably 10% by mass or less, and more preferably 5% by mass or less. Specific examples of the organic solvent include aliphatic or alicyclic alcohols such as n-butyl alcohol, n-propyl alcohol, isopropyl alcohol, ethyl alcohol, and methyl alcohol; glycols such as propylene glycol, ethylene glycol, and diethylene glycol; glycol derivatives such as n-butyl cellosolve, ethyl cellosolve, methyl cellosolve, and propylene glycol monomethyl ether; ethers such as dioxane and tetrahydrofuran; esters such as ethyl acetate and amyl acetate; ketones such as methyl ethyl ketone and acetone; and amides such as N-methylpyrrolidone.

In addition, regardless of the off-line coating or the in-line coating, heat treatment and irradiation of active energy rays such as ultraviolet irradiation may be used in combination, if necessary.

Examples of the method for forming the crosslinking resin layer include conventionally known coating methods, such as gravure coating, reverse roll coating, die coating, air doctor coating, blade coating, rod coating, bar coating, curtain coating, knife coating, transfer roll coating, squeeze coating, curtain coating, impregnation coating, kiss coating, spray coating, calender coating, and extrusion coating.

<Film Thickness of Crosslinking Resin Layer>

The film thickness of the crosslinking resin layer is preferably 0.01 to 3 μm, more preferably 0.01 to 1 μm, and even more preferably 0.01 to 0.3 μm, from the viewpoint of exhibiting various functionalities when viewed as the final film.

The coating amount of the coating liquid containing the crosslinking resin composition is usually 0.01 to 3 $g/m^2$, preferably 0.01 to 1 $g/m^2$, and more preferably 0.01 to 0.3 $g/m^2$. When the coating amount is 0.01 $g/m^2$ or more, sufficient performance can be obtained in terms of adhesion to the release layer (easy adhesion performance) and antistatic performance; and when the coating amount is 3 $g/m^2$ or less, the crosslinking resin layer can have good appearance and transparency, and there is no possibility of causing a decrease in productivity due to film blocking or reduced production line speed. In the present invention, the coating amount can be calculated from the liquid mass per coating time (before drying), the non-volatile content concentration of the coating liquid, the coating width, the stretching ratio, the production line speed, and the like.

<Specific Examples of Present Release Film Structure>

Specific examples of the structure of the present release film include structures composed of: substrate/first layer/second layer; substrate/crosslinking resin layer/first layer/second layer; substrate/anchor coat layer/first layer/second layer; substrate/antistatic layer/first layer/second layer; substrate/oligomer sealing layer/first layer/second layer; crosslinking resin layer/substrate/crosslinking resin layer/first layer/second layer; antistatic layer/substrate/antistatic layer/first layer/second layer; oligomer sealing layer/substrate/oligomer sealing layer/first layer/second layer; substrate/antistatic layer/oligomer sealing layer/first layer/second layer; second layer/first layer/substrate/first layer/second layer; second layer/first layer/anchor coat layer/substrate/anchor coat layer/first layer/second layer; second layer/first layer/antistatic layer/substrate/antistatic layer/first layer/second layer; second layer/first layer/oligomer sealing layer/substrate/oligomer sealing layer/first layer/second layer; and second layer/first layer/oligomer sealing layer/antistatic layer/substrate/antistatic layer/oligomer sealing layer/first layer/second layer. However, it is not limited to these.

The above-mentioned layers, such as the anchor coat layer, the antistatic layer, and the oligomer sealing layer, can be formed either by the in-line coating method in which the layers are formed at the same time as the film-shaped substrate is formed, or by the off-line coating in which the layers are formed in a separate process on the film-shaped substrate that has already been formed.

<Layer Thickness>

The thickness of the first layer can be relatively increased to enhance the flexibility and to reduce the fluorine content ratio, while the thickness of the second layer can be relatively decreased to reduce the fluorine content ratio. However, when the thickness of the second layer is too small, manufacturing may be difficult.

From such a viewpoint, in the case where other layers are interposed between the layers from the first layer to the second layer, that is, between the first layer and the second layer, the thickness of the second layer is preferably 60% or less, more preferably 0.01% or more or 50% or less, and even more preferably 1% or more or 40% or less, relative to the total thickness of the first layer, the second layer, and the other layers.

As described above, the second layer in the present release film does not need to cover the entire surface of the underlying layer, and thus the thickness of the second layer adopts an average thickness calculated from the coating

amount (g/m$^2$) of the second layer.

From the same viewpoint, the solid content mass of the component having a fluorine-substituted group in the second layer per unit area of the present release film is preferably 90% by mass or less, more preferably 0.01% by mass or more or 80% by mass or less, and even more preferably 1% by mass or more or 60% by mass or less, relative to the total solid content mass of the layers from the first layer to the second layer in the film area.

The second layer in the present release film does not need to cover the entire surface of the underlying layer as described above, and thus the above values may vary locally. In such a case, the measurement may be performed over an area range where the above values are stable.

<Fluorine Atom Content of Present Release Film>

The fluorine atom content (atomic number fraction) contained in the layers from the first layer to the second layer of the present release film is preferably 300 ppm or more and 500,000 ppm or less, more preferably 1,000 ppm or more or 400,000 ppm or less, and even more preferably 3,000 ppm or more or 300,000 ppm or less, from the viewpoint of reducing the amount of fluorine used.

<Method for Producing Present Release Film>

The present release film can be formed by optionally forming an anchor coat layer, an antistatic layer, an oligomer sealing layer, and the like on one or both sides of a film-shaped substrate, then sequentially coating the first layer-forming resin composition and the second layer-forming resin composition thereon, and curing them.

As a more preferable production method, a method for producing a release film, which comprises: optionally forming an anchor coat layer, an antistatic layer, an oligomer sealing layer, and the like on at least one side of a film-shaped substrate unwound from the roll state; coating a silicone composition containing a fluorine atom-free curable silicone as a main component thereon and then curing to form a first layer; continuously coating a composition substantially containing a component having a fluorine-substituted group thereon to form a second layer; and then winding up the film-shaped substrate provided with the first layer and the second layer, can be cited. Here, the fluorine atom-free curable silicone constituting the first layer can be cured at an arbitrary stage after coating the first layer.

By continuously forming the first layer and the second layer as described above, the release film can have effects of shortening the production time, improving the utilization of the film-shaped substrate by halving the portion that is lost during paper feeding, improving the wettability of the second layer, and reducing the shrinkage and slack of the film by lowering the amount of heating during the curing of the first layer.

In so doing, the first layer-forming resin composition and the second layer-forming resin composition may be coated once or twice or more. When forming the first layer and the second layer with two or more times of coating, different coating liquids may be coated. However, when forming the second layer, at least one of the coating liquids needs to contain a component having a fluorine-substituted group.

The first layer-forming resin composition, that is, the coating liquid for forming the first layer, preferably contains a curable non-fluorinated silicone, a crosslinking agent, a catalyst, a reaction initiator (reaction accelerator), and the like. In addition, it may contain other non-fluorine-containing resins, if necessary.

The paint containing the curable silicone may contain a crosslinking agent or a catalyst from the beginning.

Meanwhile, the second layer-forming resin composition, that is, the coating liquid for forming the second layer, preferably contains a curable fluorinated silicone, a crosslinking agent, a catalyst, a reaction initiator (reaction accelerator), and the like. In addition, it may contain other fluorine-containing resins or non-fluorine-containing resins, if necessary.

Examples of the crosslinking agent, the catalyst, and the reaction initiator (reaction accelerator) are as described above.

The paint containing the curable silicone may contain a crosslinking agent or a catalyst from the beginning.

Specific examples of the crosslinking agent include SP7297, 7560, 3062A, 3062B, 3062C, and 3062D, manufactured by Toray Dow Corning Co., Ltd.

Specific examples of the catalyst include CAT-PL-50T manufactured by Shin-Etsu Chemical Co., Ltd.; and SRX212, SRX212P, NC-25, and FSXK-3077, manufactured by Toray Dow Corning Co., Ltd.

In the present invention, the curable silicone of the "component formed from a curable silicone having a fluorine-substituted group" that forms the main component of the second layer may be a solvent-type, a solvent-free-type, or a mixture of these. Among them, it is more preferable to be diluted by a solvent in order to uniformly coat the second layer within an appropriate range of thickness.

In this case, the solid content mass concentration of the coating liquid forming the second layer is preferably 0.01% by mass or more, more preferably 0.05% by mass or more, and even more preferably 0.1% by mass or more. As for the upper limit, the solid content mass concentration is preferably 90% by mass or less, more preferably 50% by mass or less, and particularly preferably 20% by mass or less.

The solvent for dilution may be a polar solvent or a non-polar solvent. A fluorinated solvent having fluorine atoms may also be used. In addition, two or more types of the above solvents may also be used in a mixture.

Examples of the polar solvent include alcohols such as ethanol and (iso)propyl alcohol; esters such as methyl acetate, ethyl acetate, (iso)propyl acetate, (iso)butyl acetate, (iso)pentyl acetate, ethyl lactate, and ethyl benzoate; ketones such as methyl ethyl ketone, methyl isobutyl ketone, cyclopentanone, cyclohexanone, diacetone alcohol, and diisobutyl ketone; glycols such as ethylene glycol, ethylene glycol monoethyl ether, ethylene glycol monobutyl ether, propylene glycol monomethyl ether acetate, and propylene glycol monomethyl ether; N-methyl-2-pyrrolidone; N,N-dimethylformamide; tetrahydrofuran; and acetonitrile.

Examples of the non-polar solvent include aromatic hydrocarbons such as benzene, toluene, and xylene; aliphatic hydrocarbons such as hexane, heptane, and octane; hydrocarbons having a branched structure such as isohexane, isooctane, and isononane; alicyclic hydrocarbons such as cyclohexane, cycloheptane, and cyclooctane; and dioxane. Examples of the fluorine solvent include hydrofluoroethers, metaxylene hexafluoride, and tridecafluorooctane.

The method for coating the first and second layer-forming resin compositions may be either in-line coating or off-line coating. For example, a coating technique as described in "Coating Houhou" ("Coating Method") written by Yuji Harasaki and published by Makishoten (1979) can be adopted.

Examples of the coating head include air doctor coater, blade coater, rod coater, knife coater, squeeze coater, impregnation coater, reverse roll coater, transfer roll coater, gravure coater, kiss roll coater, cast coater, spray coater, curtain coater, calender coater, and extrusion coater.

As a method for forming the layers, a method in which a raw material liquid having a fluorine atom content corresponding to each layer after coating and drying is prepared in advance and used as a coating liquid can be exemplified.

The first and second layers can be formed by coating and drying the first layer and then coating and drying the second layer. In so doing, these can be formed by a wet coating method in which the second layer is coated after coating the first layer, followed by drying, which can be expected to shorten the production process and improve energy efficiency.

Also, as described above, by coating and forming the first layer on at least one side of the film-shaped substrate and then continuously coating and forming the second layer thereon, these layers can be formed in a single unwinding to winding process of the film-shaped substrate, which can be expected to shorten the production process and reduce the loss of the film-shaped substrate.

An alternative method is to coat a curable non-fluorinated silicone to form the first layer, and then coat a solution containing a curable fluorinated silicone as a main component to form the second layer. This method is more preferable since the release film can be stably produced.

Yet another method is to previously form a non-fluorinated resin by coating, and then form a fluorinated layer by a dry process such as carbon tetrafluoride ($CF_4$) plasma treatment. However, this method is suitable for large-scale production since it requires a chamber for plasma treatment.

The first layer-forming resin composition is usually cured by heating after coating the first layer-forming resin composition. In addition, a crosslinking method other than heating may be introduced when an ultraviolet curing agent is included as a crosslinking agent.

When the in-line coating is used as a method for producing the present release film, both the first layer and the second layer may be formed by the in-line coating, or only the first layer may be formed by the in-line coating and the second layer may be formed by the off-line coating.

When both the first layer and the second layer are formed by the off-line coating, the layers may be formed continuously by a single "unwinding to winding process of the film-shaped substrate", or may be formed sequentially through a plurality of "unwinding to winding processes of the film-shaped substrate". Among them, continuous formation in a single "unwinding to winding process of the film-shaped substrate" is a particularly preferred method since the production process can be simplified and the production can be performed at a lower cost.

It is also preferred since, by making the amount of heat applied to the film during the formation of the first layer lower than that applied during the formation of the second layer, deterioration of film flatness during the formation of the second layer can be suppressed, and uneven coating of the second layer can be effectively prevented.

As for the method for producing the present release film, a production method in which the production is started from the release film already provided with the first layer can also be assumed. For example, a release film originally produced for other applications may be difficult to use for the intended application, for example, when it is produced in excess.

In other words, the present release film can be produced by: preparing a release film, which is available from the market or the like, having a first layer formed from a silicone composition containing a fluorine atom-free curable silicone as a main component on at least one side of the film-shaped substrate; and then forming a second layer containing a component having a fluorine-substituted group on the first layer.

Thereby, the release film, which has been considered difficult to divert, can be reused for the present release film.

<Present Film Laminate: Method for Using Present Release Film>

Since the present release film has excellent releasability against silicone adhesives, for example, a release film-equipped adhesive sheet having a structure in which the present release film and an adhesive layer formed from a silicone adhesive are laminated (referred to as "present film laminate") can be provided.
However, the method for using the present release film is not limited to such a method of use. The present release film can also be used as a process paper or interleaving paper for producing members since it can prevent sticking to the members. Examples of the process paper include a process paper for a ceramic green sheet, a process paper for a decorative film, and a process paper for a carbon fiber prepreg. Examples of the interleaving paper include an interleaving paper for press processing and an interleaving paper for punching processing.
As an example of the present film laminate, a film laminate having a structure of being bonded to a laminated film via a silicone adhesive layer can be cited.

(Laminated Film (1))

As an example of the laminated film, a laminated film having a crosslinking resin layer, that is, a layer having a structure in which the resin is crosslinked, provided on at least one side of a substrate film (referred to as "laminated film (1)") can be cited.
Examples of the crosslinking resin layer include those formed from a crosslinking agent resin layer composition containing a conductive polymer and a binder polymer, and optionally a crosslinking agent, particles, and other components.
The conductive polymer, binder polymer, crosslinking agent, particles, and other components, as well as the formation method and thickness of the crosslinking resin layer, are the same as above.
Examples of the substrate film include films composed of thermoplastic resins, such as: polyester-based resins such as polyethylene terephthalate, polyethylene isophthalate, polyethylene naphthalate, and polybutylene terephthalate; cellulose-based resins such as diacetyl cellulose and triacetyl cellulose; polycarbonate-based resins; acrylic resins such as polymethyl (meth)acrylate and polyethyl (meth)acrylate; styrene-based resins such as polystyrene and acrylonitrile-styrene copolymers; polyolefin-based resins such as polyethylene, polypropylene, polyolefins having a cyclo-based or norbornene structure, and ethylene-propylene copolymers; vinyl chloride-based resins; amide-based resins such as nylon and aromatic polyamide; imide-based resins; polyether sulfone-based resins; sulfone-based resins; polyetheretherketone-based resins; polyphenylene sulfide-based resins; vinyl alcohol-based resins; vinylidene chloride-based resins; vinyl butyral-based resins; arilate-based resins; polyoxymethylene-based resins; and epoxy-based resins. In addition, films composed of thermosetting resins or ultraviolet curable resins, such as (meth)acrylic, urethane-based, acrylic urethane-based, epoxy-based, and silicone-based resins, may be used.

(Laminated Film (2))

As another example of the laminated film, a release film having a release layer ("release layer (2)") different from the release layer of the present release film on one side of a substrate film (referred to as "laminated film (2)") can be cited.
The substrate film is the same as that of the laminated film (1).
As for the releasing force ratio between the present release film and the release film (2), that is, the ratio of the releasing force of the present release film to the releasing force of the release film (2) (present release film/release film (2)), the lower limit thereof may be 2 or more, and preferably 3 or more. Meanwhile, the upper limit thereof may be 10 or less, preferably 8 or less, and more preferably 6 or less.
As an example of the release layer (2), a layer sequentially having a first layer (2) formed from a silicone composition containing a fluorine atom-free curable silicone as a main component on at least one side of a substrate film, and a second layer (2) containing a component having a fluorine-substituted group, can be cited.
In this case, the first layer (2) and the second layer (2) are the same as the first layer and the second layer in the present release film, respectively.
As another example of the release layer (2), (A) a layer formed from a silicone composition containing a curable silicone containing a fluorine-substituted group, as a main component, can be cited.
As another example of the release layer (2), (B) a layer formed from a silicone composition containing a curable silicone containing no fluorine-substituted group, as a main component, can be cited.
Here, the term "main component" means the component having the largest mass ratio among the constituent components.

(Silicone Adhesive)

Examples of the silicone adhesive include addition reaction-type, peroxide curing-type, and condensation reaction-type silicone adhesives. Among them, addition reaction-type silicone adhesives can be preferably used from the viewpoint that they can be cured at a low temperature in a short time. These addition reaction-type silicone adhesives are cured at the time of forming the adhesive layer on a support.

When an addition reaction-type silicone adhesive is used as the silicone adhesive, the silicone adhesive may contain a catalyst such as a platinum catalyst.

For example, the above-mentioned addition reaction-type silicone adhesive can be diluted with a solvent such as toluene, if necessary, to obtain a silicone resin solution. The silicone resin solution can be then added with a catalyst such as a platinum catalyst and stirred to be uniformly mixed, and the mixture can be coated on a support and cured at 100°C to 130°C for 1 to 5 minutes.

Also, if necessary, the addition reaction-type silicone adhesive may be added with a crosslinking agent or an additive for controlling the adhesive force, or the support may be subjected to a primer treatment before the formation of the adhesive layer.

Examples of the commercially available products of the silicone resin used for the addition reaction-type silicone adhesive include SD4580PSA, SD4584PSA, SD4585PSA, SD4587LPSA, SD4560PSA, SD4570PSA, SD4600FCPSA, SD4593PSA, DC7651 ADHESIVE, DC7652 ADHESIVE, LTC-755, and LTC-310 (all manufactured by Toray Dow Corning Co., Ltd.); KR-3700, KR-3701, X-40-3237-1, X-40-3240, X-40-3291-1, X-40-3229, X-40-3323, X-40-3306, and X-40-3270-1 (all manufactured by Shin-Etsu Chemical Co., Ltd.); AS-PSA001, AS-PSA002, AS-PSA003, AS-PSA004, AS-PSA005, AS-PSA012, AS-PSA014, and PSA-7465 (all manufactured by Arakawa Chemical Industries, Ltd.); and TSR1512, TSR1516, and TSR1521 (all manufactured by Momentive Performance Materials Inc.).

<Method for Using Present Film Laminate>

The present film laminate can be used by, for example, releasing the present release film and then bonding the exposed surface of the silicone adhesive layer to an optical member serving as an adherend.

The present film laminate can also be used by releasing the present release film or the release film (2) and then bonding the exposed surface of the silicone adhesive layer to an optical member serving as an adherend.

Examples of the optical member include a polarizing plate and a touch sensor.

The present film laminate can also be used for in-vehicle applications, such as touch panels installed in automobiles, by utilizing the heat resistance, cold resistance, weather resistance, and high transparency of the silicone adhesive itself.

(Polarizing Plate)

The material and configuration of the polarizing plate are arbitrary. For example, those in which a TAC (triacetyl cellulose) film serving as a protective film is laminated on a stretched polyvinyl alcohol film that uses iodine as an orientation dye, are widely used for this type of polarizing plate.

The polarizing plate may also have a layer structure having functions such as hard coating having substantially no phase difference, antiglare, low reflection, and antistatic, on the surface.

(Touch Sensor)

The touch sensor is, when a user touches the image displayed on the screen with a finger or a stylus, a member that reacts to the contact and grasps the touch point, and depending on the sensor technology, methods such as a capacitance method, a resistive film method, and a surface wave method using infrared rays or ultrasonic waves, are exemplified.

In general, the touch sensor is installed in display devices such as a liquid crystal display panel and an organic EL.

In recent years, there has been a trend to use a substrate film as a substitute for glass substrates, focusing on its flexibility.

Touch sensor films are generally provided with a patterned transparent conductive layer for exerting the function of sensing electrodes.

The present film laminate is preferably used for bonding in-vehicle members from the perspective of being able to use a silicone adhesive having good durability and transparency.

<Explanation of Terms and Phrases>

According to the definition of Japanese Industrial Standard (JIS), a "sheet" is generally a thin and flat product having a thickness that is smaller than the length and the width thereof, and a "film" is generally a product having a thickness that is extremely smaller than the length and the width thereof, and having a maximum thickness that is arbitrarily determined, which is generally supplied in the form of a roll (Japanese Industrial Standard, JIS K6900). However, there is no definite boundary between the sheet and the film, and there is no need of literally distinguishing these terms. In the present invention, accordingly, the case referred to as a "film" is assumed to include a "sheet", and the case referred to as a "sheet" is assumed to include a "film".
In the case of being described as the phrase "X to Y" (X and Y are arbitrary numbers) in the present invention, the phrase includes the meaning of "preferably more than X" or "preferably less than Y" along with the meaning "X or more and Y or less", unless otherwise stated.
Also, the phrase "X or more" (wherein X represents an arbitrary numeral) or "Y or less" (wherein Y represents an arbitrary numeral) includes the meaning "preferably more than X" or "preferably less than Y", unless otherwise stated.

EXAMPLES

Hereinafter, the present invention will be specifically described with reference to Examples. The present invention is not limited to the following Examples.
In the following Examples and Comparative Examples, a PET film ("T100-38", thickness of 38 μm, manufactured by Mitsubishi Chemical Corp.) was used as the film-shaped substrate (simply referred to as "substrate").

<Example 1>

To form a first layer, 100 parts by mass of a super-heavy releasing non-fluorinated silicone release agent ("X-62-2825", solvent-type, manufactured by Shin-Etsu Chemical Co., Ltd.) and 1 part by mass of a platinum catalyst ("CAT-PL-50T" manufactured by Shin-Etsu Chemical Co., Ltd.) were diluted to a solid content concentration of 4% by mass using toluene/methyl ethyl ketone/heptane (5:1:5), thereby preparing a coating liquid A1.
Here, the agent "X-62-2825" has a very large number of diphenylsiloxane structures in the polymer structure of the main material.
The coating liquid A1 was coated on the substrate using a No. 4 bar, and cured by heat treating at 150°C for 10 seconds to form a first layer. The normal-state releasing force of the film at the time of forming the first layer was 577 mN/cm, and the water contact angle thereof was 103.4 degrees.
To form a second layer, 100 parts by mass of a fluorinated silicone release agent ("X-41-3035" manufactured by Shin-Etsu Chemical Co., Ltd.) and 5 parts by mass of a platinum catalyst ("CAT-PL-50T" manufactured by Shin-Etsu Chemical Co., Ltd.) were diluted to a solid content concentration of 1% by mass using heptane, thereby preparing a coating liquid B1.
The coating liquid B1 was coated on the first layer using a No. 4 bar, and cured by heat treating at 150°C for 15 seconds to form a second layer, thereby preparing a release film (sample).

<Example 2>

To form a first layer, 100 parts by mass of a heavy releasing non-fluorinated silicone release agent ("KS-3703T", solvent-type, manufactured by Shin-Etsu Chemical Co., Ltd.) and 1 part by mass of a platinum catalyst ("CAT-PL-50T" manufactured by Shin-Etsu Chemical Co., Ltd.) were diluted to a solid content concentration of 4% by mass using toluene/methyl ethyl ketone/heptane (5:1:5), thereby preparing a coating liquid A2.
Here, the agent "KS-3703T" has a large number of diphenylsiloxane structures in the polymer structure of the main material.
The coating liquid A2 was coated on the substrate using a No. 4 bar, and cured by heat treating at 150°C for 10 seconds to form a first layer. The normal-state releasing force of the film at the time of forming the first layer was 25 mN/cm, and the water contact angle thereof was 108.5 degrees.
To form a second layer, 100 parts by mass of a fluorinated silicone release agent ("Q2-7785" manufactured by Toray Dow Corning Co., Ltd.) and 1.5 parts by mass of a crosslinking agent ("Q2-7560" manufactured by Toray Dow Corning Co., Ltd.) were diluted to a solid content concentration of 1% by mass using heptane, thereby preparing a coating liquid B2.
The coating liquid B2 was coated on the first layer using a No. 4 bar, and cured by heat treating at 150°C for 15 seconds to form a second layer, thereby preparing a release film (sample).

<Example 3>

To form a second layer, 100 parts by mass of a fluorinated silicone release agent ("Q2-7785" manufactured by Toray Dow Corning Co., Ltd.) and 1.5 parts by mass of a crosslinking agent ("Q2-7560" manufactured by Toray Dow Corning Co., Ltd.) were diluted to a solid content concentration of 0.5% by mass using heptane, thereby preparing a coating liquid B3.
A release film (sample) was prepared in the same manner as in Example 2 except that the coating liquid B2 was changed to the coating liquid B3.

<Example 4>

To form a second layer, 100 parts by mass of a fluorinated silicone release agent ("Q2-7785" manufactured by Toray Dow Corning Co., Ltd.), 1.5 parts by mass of a crosslinking agent ("Q2-7560" manufactured by Toray Dow Corning Co., Ltd.), and 0.5 part by mass of a siloxane ("KS-847H" manufactured by Shin-Etsu Chemical Co., Ltd.), which was a fluorine atom-free additive having a siloxane bond, were diluted to a solid content concentration of 0.5% by mass using heptane, thereby preparing a coating liquid B4.
A release film (sample) was prepared in the same manner as in Example 2 except that the coating liquid B2 was changed to the coating liquid B4.
The content of the siloxane, which was a fluorine atom-free material having a siloxane bond, was 0.18% by mass relative to the amount of the component having a fluorine-substituted group in the second layer.

<Comparative Example 1>

With no first layer formed on the substrate, the coating liquid B1 was coated on the substrate using a No. 4 bar, and cured by heat treating at 150°C for 15 seconds to form only a second layer, thereby preparing a release film (sample).

<Comparative Example 2>

To form a second layer, 100 parts by mass of a fluorinated silicone release agent ("X-41-3035" manufactured by Shin-Etsu Chemical Co., Ltd.) and 5 parts by mass of a platinum catalyst ("CAT-PL-50T" manufactured by Shin-Etsu Chemical Co., Ltd.) were diluted to a solid content concentration of 4% by mass using heptane, thereby preparing a coating liquid B5.
A release film (sample) was prepared in the same manner as in Comparative Example 1 except that the coating liquid B1 was changed to the coating liquid B5.

<Comparative Example 3>

To form a first layer, 100 parts by mass of a light releasing non-fluorinated silicone release agent ("KS-847H", solvent-type, manufactured by Shin-Etsu Chemical Co., Ltd.) and 1 part by mass of a platinum catalyst ("CAT-PL-50T" manufactured by Shin-Etsu Chemical Co., Ltd.) were diluted to a solid content concentration of 4% by mass using toluene/methyl ethyl ketone/heptane (5:1:5), thereby preparing a coating liquid A3.
Here, the agent "KS-847H" has no diphenylsiloxane structure in the polymer structure of the main material.
The coating liquid A3 was coated on the substrate using a No. 4 bar, and cured by heat treating at 150°C for 10 seconds to form a first layer. The normal-state releasing force of the film at the time of forming the first layer was 11 mN/cm, and the water contact angle thereof was 109.5 degrees.
A release film (sample) was prepared in the same manner as in Example 1 except that the coating liquid A1 was changed to the coating liquid A3.

<Comparative Example 4>

To form a first layer, 100 parts by mass of a medium releasing non-fluorinated silicone release agent ("KS-774", solvent-type, manufactured by Shin-Etsu Chemical Co., Ltd.) and 1 part by mass of a platinum catalyst ("CAT-PL-50T" manufactured by Shin-Etsu Chemical Co., Ltd.) were diluted to a solid content concentration of 4% by mass using toluene/methyl ethyl ketone/heptane (5:1:5), thereby preparing a coating liquid A4.
Here, the agent "KS-774" has a large number of diphenylsiloxane structures in the polymer structure of the main material.
A release film (sample) was prepared in the same manner as in Example 1 except that the coating liquid A1

was changed to the coating liquid A4. The normal-state releasing force of the film at the time of forming the first layer was 20 mN/cm, and the water contact angle thereof was 108.5 degrees.

<Comparative Example 5>

A release film (sample) was prepared in the same manner as in Example 1 except that the coating liquid A1 was changed to the coating liquid A2 to form a first layer. The normal-state releasing force of the film at the time of forming the first layer was 25 mN/cm.

<Comparative Example 6>

With no first layer formed on the substrate, the coating liquid B3 was coated on the substrate using a No. 4 bar, and cured by heat treating at 150°C for 15 seconds to form only a second layer, thereby preparing a release film (sample).

<Comparative Example 7>

With no first layer formed on the substrate, the coating liquid B2 was coated on the substrate using a No. 4 bar, and cured by heat treating at 150°C for 15 seconds to form only a second layer, thereby preparing a release film (sample).

<Comparative Example 8>

To form a second layer, 100 parts by mass of a fluorinated silicone release agent ("Q2-7785" manufactured by Toray Dow Corning Co., Ltd.) and 1.5 parts by mass of a crosslinking agent ("Q2-7560" manufactured by Toray Dow Corning Co., Ltd.) were diluted to a solid content concentration of 4% by mass using heptane, thereby preparing a coating liquid B6. With no first layer formed on the substrate, the coating liquid B6 was coated on the substrate using a No. 4 bar, and cured by heat treating at 150°C for 15 seconds to form a second layer, thereby preparing a release film (sample).

<Evaluation Methods>

(1) Normal-State Releasing Force

The normal-state releasing force of the second layer was measured as follows. The release film (sample) prepared in each of Examples and Comparative Examples was bonded to the silicone adhesive side of a silicone adhesive-equipped polyimide tape No. 5413 (manufactured by 3M) at a width of 5 cm, and the normal-state releasing force was measured using a releasing tester under the conditions of 180° releasing and 0.3 m/min releasing speed under an environment of 23°C.

As for the normal-state releasing force of the first layer, at the time of forming the first layer in each of Examples and Comparative Examples, the first layer was bonded to a tape No. 502 (manufactured by Nitto Denko Corp.) at a width of 5 cm, and the normal-state releasing force was measured using a releasing tester under the conditions of 180° releasing and 0.3 m/min releasing speed under an environment of 23°C.

(2) Covering Ratio of Second Layer

The release film (sample) prepared in each of Examples and Comparative Examples was observed using a microscope (VHX-1000, VHX-1020 camera unit, objective lens: magnification of 5 times, manufactured by Keyence Corp.) to measure the covering ratio of the second layer.

The covering ratio of the second layer was simply calculated by drawing a line to both ends at an arbitrary point in the obtained micrograph, summing up the lengths of the areas where the film of the second layer was visually confirmed to be formed, and dividing the sum of the second layer length by the total length of the sample. At this time, the areas where the second layer was dot-shaped or line-shaped (mesh-shaped) due to cissing were calculated as uncoated areas.

(3) Solid Content Mass Ratio ($M_F/M_S$) of Component Having Fluorine-Substituted Group

The solid content mass ratio of the component having a fluorine-substituted group per unit area of the second layer is shown as $M_F/M_S$ in Table 3. The $M_F/M_S$ was calculated based on the solid content mass and the coating amount

(film thickness) in the coating solution by the following definitions. The intentional fluorine atom content of the first layer was 0 ppm in all Examples.

The $M_F/M_S$ is preferably 0.0001 or more, more preferably 0.01 or more, and even more preferably 0.02 or more. Meanwhile, the $M_F/M_S$ is preferably 0.90 or less, more preferably 0.80 or less, and particularly preferably 0.60 or less.

$M_F$: Solid content mass per unit area of the component having a fluorine-substituted group contained in the second layer
$M_S$: Solid content mass per unit area of the total from the first layer to the second layer

(4) Measurement of Elastic Moduli of First Layer and Second Layer

The elastic moduli of the first layer and the second layer were measured by the nanoindenter method.

Measurement apparatus: TI950 Tribo Indenter (Hysitron, Inc.)
Measurement conditions: Terminal used/ Berkovich (triangular cone-type), measurement method/ single press measurement, pressing depth setting/ 50 nm, and temperature conditions/ room temperature

(5) High-Speed Releasing Force

The release film (sample) prepared in each of Examples and Comparative Examples was bonded to a silicone adhesive-equipped polyimide tape No. 5413 (manufactured by 3M) at a width of 5 cm, and the high-speed releasing force of the second layer was measured using a high-speed releasing tester (model: "RT3300" manufactured by Tester Sangyo Co., Ltd.) under the conditions of 180° releasing and 30 m/min releasing speed under an environment of 23°C.

[Table 1]

| | | A1 | A2 | A3 | A4 | A5 |
|---|---|---|---|---|---|---|
| Non-fluorinated silicone release agent | X-62-2825 | 100 | | | | |
| | KS-3703T | | 100 | | | |
| | KS-847H | | | 100 | | |
| | KS-774 | | | | 100 | |
| | KS-3703T | | | | | 100 |
| Platinum catalyst | CAT-PL-50T | 1 | 1 | 1 | 1 | 1 |
| Solid content concentration [% by mass] | | 4 | 4 | 4 | 4 | 4 |

[Table 2]

| | | B1 | B2 | B3 | B4 | B5 | B6 |
|---|---|---|---|---|---|---|---|
| Fluorinated silicone release agent | X-41-3035 | 100 | | | | 100 | |
| | Q2-7785 | | 100 | 100 | 100 | | 100 |
| Crosslinking agent | Q2-7560 | | 1.5 | 1.5 | 1.5 | | 1.5 |
| Siloxane | KS-847H | | | | 0.5 | | |
| Platinum catalyst | CAT-PL-50T | 5 | | | | 5 | |
| Solid content concentration [% by mass] | | 1 | 1 | 0.5 | 0.5 | 4 | 4 |

[Table 3]

| | First layer | | | Second layer | | | | Normal-state releasing force (0.3 m/min) [mN/cm] | High-speed releasing force (30 m/min) [mN/cm] | $M_F/M_S$ [-] |
|---|---|---|---|---|---|---|---|---|---|---|
| | Coating liquid | Solid content mass [g/m$^2$] | Elastic modulus [Gpa] | Coating liquid | Solid content mass [g/m$^2$] | Elastic modulus [Gpa] | Covering ratio [%] | | | |
| Example 1 | A1 | 0.29 | 0.17 | B1 | 0.062 | 0.31 | 100 | 45 | 199 | 0.18 |
| Example 2 | A2 | 0.29 | 0.16 | B2 | 0.062 | 4.27 | 100 | 29 | 205 | 0.18 |
| Example 3 | A2 | 0.29 | 0.16 | B3 | 0.031 | 4.52 | 100 | 61 | 305 | 0.10 |
| Example 4 | A2 | 0.29 | 0.16 | B4 | 0.031 | 3.69 | 100 | 33 | 233 | 0.10 |

[Table 4]

| | First layer | | | Second layer | | | | Normal-state releasing force (0.3 m/min) [mN/cm] | High-speed releasing force (30 m/min) [mN/cm] |
|---|---|---|---|---|---|---|---|---|---|
| | Coating liquid | Solid content mass [g/m$^2$] | Elastic modulus [Gpa] | Coating liquid | Solid content mass [g/m$^2$] | Elastic modulus [Gpa] | Covering ratio [%] | | |
| Comparative Example 1 | - | - | - | B1 | 0.062 | 0.31 | - | 79 | 1295 |
| Comparative Example 2 | - | - | - | B5 | 0.250 | 0.24 | - | 51 | 208 |
| Comparative Example 3 | A3 | 0.29 | 0.08 | B1 | 0.062 | 0.31 | 0 | 2297 | - |
| Comparative Example 4 | A4 | 0.29 | 0.15 | B1 | 0.062 | 0.31 | 20 | 2121 | - |
| Comparative Example 5 | A5 | 0.29 | 0.15 | B1 | 0.062 | 0.31 | 38 | 246 | - |
| Comparative Example 6 | - | - | - | B3 | 0.031 | 4.52 | - | 100 | - |
| Comparative Example 7 | - | - | - | B2 | 0.062 | 4.27 | - | 91 | 295 |
| Comparative Example 8 | - | - | - | B6 | 0.250 | 2.96 | - | 30 | 308 |

In the release films in which the 1% by mass solution of the fluorinated silicone release agent B1 (X-41-3035) was coated on the first layer using a No. 4 bar as the second layer, the more the silicone release agent forming the first layer was of the heavy releasing-type (Table 2), the lighter the releasing force to the silicone adhesive-equipped tape tended to be. In particular, the release film of Example 1 in which the super-heavy releasing non-fluorinated silicone release agent A1 (X-62-2825), which was the heaviest releasing-type in Examples, was used as the first layer had a lower normal-state releasing force than that of the release film of Comparative Example 1 in which the fluorinated silicone release agent was coated on the PET film so as to have the same film thickness as in Example 1, and that of the release film of Comparative Example 2 in which the fluorinated silicone release agent was coated on the PET film so as to have a film thickness four times that of Example 1, and thus it was found that good light releasability could be obtained with a small amount of fluorine used.

In the release film of Example 1, which had the lightest releasability among those using the fluorinated silicone release agent B1 (X-41-3035) for the second layer, it was confirmed that the fluorinated silicone release agent could be coated on the entire surface without any cissing. FIG. 1 shows a micrograph of the second layer surface of the release film prepared in Example 1. The surface of the second layer had no ball-shaped or line-shaped areas due to cissing, indicating that the entire surface could be covered with the second layer as a film (covering ratio: 100%).

On the other hand, in the fluorinated silicone release film of Comparative Example 3, cissing occurred on the entire surface, and the fluorinated silicone layer could not be formed. FIGS. 3 and 4 show micrographs of the second layer surface of the release film prepared in Comparative Example 3. The surface of the second layer had ball-shaped areas due to cissing, indicating that the entire surface could not be covered with the second layer (covering ratio: 0%).

In the fluorinated silicone release film of Comparative Example 5, it was confirmed that the fluorinated silicone release agent layer was partially formed. FIG. 5 shows a micrograph of the second layer surface of the release film prepared in Comparative Example 5. A part of the surface of the second layer was line-shaped due to cissing, indicating that the surface could be only partially covered with the second layer (covering ratio: 38%).

From the above results, in order to reduce the amount of fluorine used, the covering ratio of the second layer is at least 50% or more, preferably 70% or more, more preferably 90% or more, and particularly preferably 100%.

The release film of Example 2 in which the 1% by mass solution of the fluorinated silicone release agent B2 (Q2-7785) was used as the fluorinated silicone release agent forming the second layer had the same light releasability as the release film of Comparative Example 7 in which the fluorinated silicone release agent was coated on the PET film so as to have the same film thickness as in Example 2 and the release film of Comparative Example 8 in which the fluorinated silicone release agent was coated on the PET film so as to have a film thickness four times that of Example 2, and thus the light releasability could be obtained with a small amount of fluorine.

On the other hand, the release film of Example 3 in which the amount of fluorine used was further reduced by using the 0.5% by mass solution of the fluorinated silicone release agent B2 (Q2-7785) as the second layer had more light releasability than the release film of Comparative Example 6 in which the fluorinated silicone release agent was coated on the PET film so as to have the same film thickness as in Example 3 and the release film of Comparative Example 7 in which the fluorinated silicone release agent was coated on the PET film so as to have a film thickness two times that of Example 3, but not as light releasability as the release film of Example 2.

It is considered that cissing occurred at a level that could not be detected by microscopic observation, and thus the releasing force increased compared to Example 2.

However, the release film of Example 4 in which a small amount of curable non-fluorinated silicone (KS-847H) was added as a siloxane component for improving the wettability of the solution forming the second layer to the first layer had the same light releasability as in Example 2 and Comparative Example 8, and the amount of fluorine used could be further reduced.

The non-fluorinated silicone, KS-847H, has a higher surface energy than the fluorinated silicone materials and also has a higher affinity with the curable silicone forming the first layer. Thus, it is presumed that, by migrating to the second layer-first layer interface instead of the air-liquid interface at the time of coating the second layer solution, the wettability of the second layer could be improved, and the releasability to the silicone adhesive could be hardly affected.

It was also found that, as in Examples 1 to 4, by introducing diphenyl groups into the first layer by forming the first layer from a silicone composition containing a curable silicone having a large number of diphenyl groups as a main component, the elastic modulus (F2) of the first layer was increased, and the wettability of the first layer surface could be modified, resulting in that the second layer having fewer coating defects could be formed, and excellent releasability to the silicone adhesive could be obtained while reducing the fluorine atom content.

## Claims

**1.** A release film, comprising:

a first layer formed from a silicone composition containing a fluorine atom-free curable silicone as a main component on at least one side of a film-shaped substrate; and a second layer containing a component having a fluorine-substituted group on the upper side of the first layer,
wherein the first layer has an elastic modulus (F2), as measured using a nanoindenter, of 0.16 GPa or more.

**2.** A release film, comprising:

a first layer formed from a silicone composition containing a fluorine atom-free curable silicone as a main component on at least one side of a film-shaped substrate; and a second layer containing a component having a fluorine-substituted group on the upper side of the first layer,
wherein the first layer has a diphenyl group.

**3.** The release film according to claim 1 or 2, wherein the second layer covers the surface of the underlying layer at a ratio of at least 50% or more.

**4.** The release film according to any one of claims 1 to 3, wherein the fluorine atom-free curable silicone comprises a solvent-type curable silicone.

**5.** A release film, comprising:

a first layer formed from a silicone composition containing a fluorine atom-free curable silicone as a main component on at least one side of a film-shaped substrate; and a second layer containing a component having a fluorine-substituted group on the upper side of the first layer,
wherein the fluorine atom-free curable silicone comprises an aqueous-based curable silicone.

**6.** The release film according to any one of claims 1 to 5, having a solid content mass of the component having a fluorine-substituted group per unit area of the film of 90% by mass or less of the total solid content mass of the layers from the first layer to the second layer in the film area.

**7.** The release film according to any one of claims 1 to 6, wherein the first layer has a fluorine atom content (atomic number fraction) of 50 ppm or less, and the second layer has a fluorine atom content of 500 ppm or more and 900,000 ppm or less.

**8.** The release film according to any one of claims 1 to 7, wherein the second layer comprises a component formed from a curable silicone having a fluorine-substituted group.

**9.** The release film according to any one of claims 1 to 8, wherein the second layer comprises a fluorine atom-free material having a siloxane bond.

**10.** The release film according to claim 9, wherein the second layer comprises the fluorine atom-free material having a siloxane bond at a ratio of 0.001 to 99.0% by mass in the second layer.

**11.** The release film according to any one of claims 1 to 10, wherein the second layer has an elastic modulus (F2), as measured using a nanoindenter, of 0.40 GPa or more.

**12.** The release film according to any one of claims 1 to 11, wherein the elastic modulus (F1) of the first layer and the elastic modulus (F2) of the second layer, as measured using a nanoindenter, satisfy the following relationship:

$$F1 + 0.40\ GPa \leq F2.$$

**13.** The release film according to any one of claims 1 to 12, wherein the second layer has a normal-state releasing force of 100 mN/cm or less.

**14.** The release film according to any one of claims 1 to 13, wherein the second layer has a coating thickness (after drying) of 0.01 $g/m^2$ or more and 0.14 $g/m^2$ or less.

**15.** The release film according to any one of claims 1 to 14, wherein the second layer covers the surface of the underlying

layer at a ratio of at least 50% or more and 99% or less.

**16.** A method for producing a release film, comprising:

forming a first layer by coating a silicone composition containing a fluorine atom-free curable silicone as a main component on at least one side of a film-shaped substrate;
forming a second layer by coating a composition substantially containing a component having a fluorine-substituted group on the first layer; and
curing the first layer at an arbitrary stage.

**17.** A film laminate, having a structure in which the release film according to any one of claims 1 to 15 is bonded to a laminated film via a silicone adhesive agent layer,
wherein the laminated film has a crosslinking resin layer on at least one side of a substrate film.

**18.** The film laminate according to claim 17, wherein the crosslinking resin layer comprises a layer containing a conductive polymer (A) and a binder polymer (B).

**19.** A film laminate, having a structure in which the release film according to any one of claims 1 to 15 is bonded to a laminated film via a silicone adhesive agent layer,
wherein the laminated film comprises a release film (2) having a release layer (2) on at least one side of a substrate film.

**20.** The film laminate according to claim 19, wherein the release film (2) has a structure in which a first layer (2) formed from a silicone composition containing a fluorine atom-free curable silicone as a main component and a second layer (2) containing a component having a fluorine-substituted group are sequentially laminated on at least one side of a substrate film.

**21.** The film laminate according to claim 19, wherein the release layer (2) comprises a layer formed from a silicone composition containing a fluorine-substituted group-containing curable silicone as a main component.

**22.** The film laminate according to claim 19, wherein the release layer (2) is formed from a silicone composition containing a fluorine atom-free curable silicone as a main component.

**23.** A method for using the film laminate according to claim 17 or 18, wherein the surface of the silicone adhesive agent layer exposed by releasing the release film according to any one of claims 1 to 15 is bonded to an optical member serving as an adherend.

**24.** A method for using the film laminate according to any one of claims 19 to 22,
wherein the surface of the silicone adhesive agent layer exposed by releasing the release film according to any one of claims 1 to 15 or the release film (2) is bonded to an optical member serving as an adherend.

**25.** The method for using a film laminate according to claim 23 or 24, wherein the optical member comprises a polarizing plate and a touch sensor.

**26.** The method for using a film laminate according to any one of claims 23 to 25, wherein the optical member comprises an in-vehicle optical member.

**27.** A method for producing the release film according to any one of claims 1 to 15, comprising:

preparing a release film having a first layer formed from a silicone composition containing a fluorine atom-free curable silicone as a main component on at least one side of a film-shaped substrate; and
forming a second layer containing a component having a fluorine-substituted group on the first layer.

[FIG. 1]

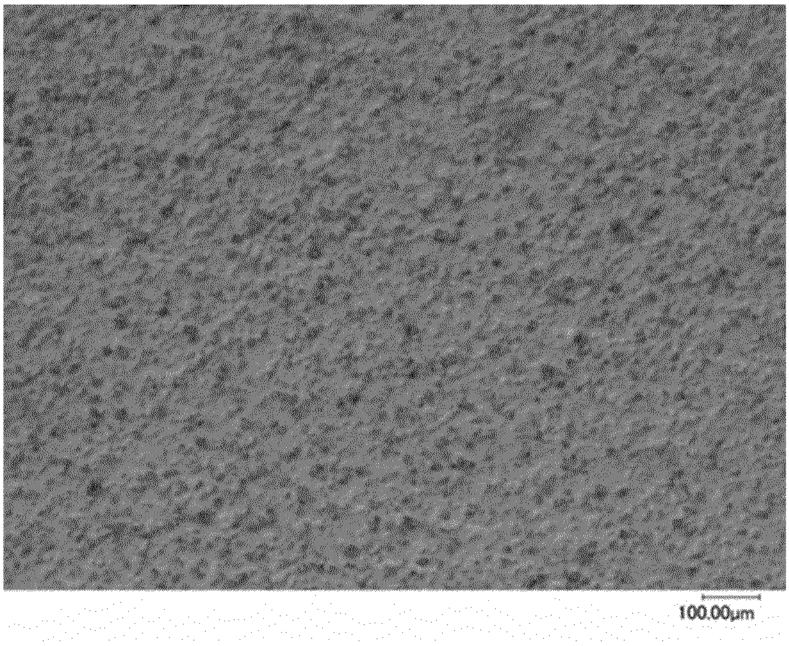


[FIG. 2]

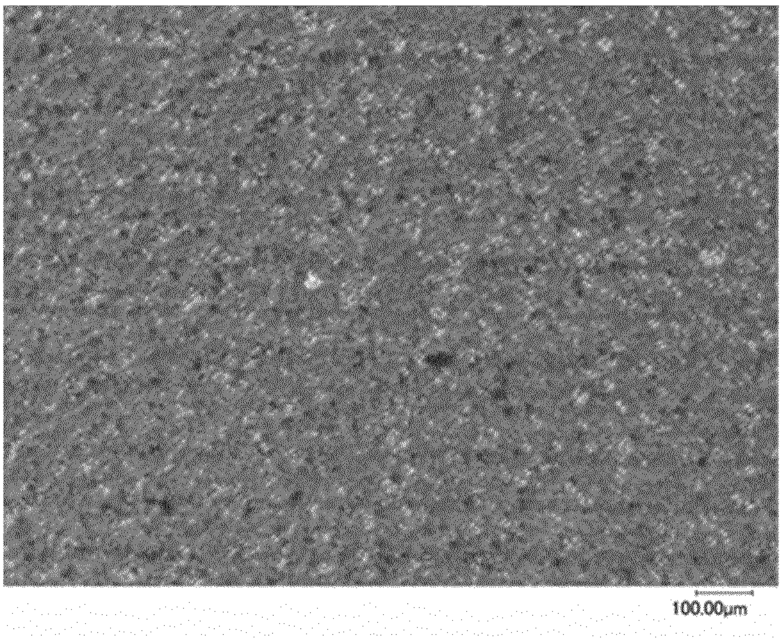

[FIG. 3]

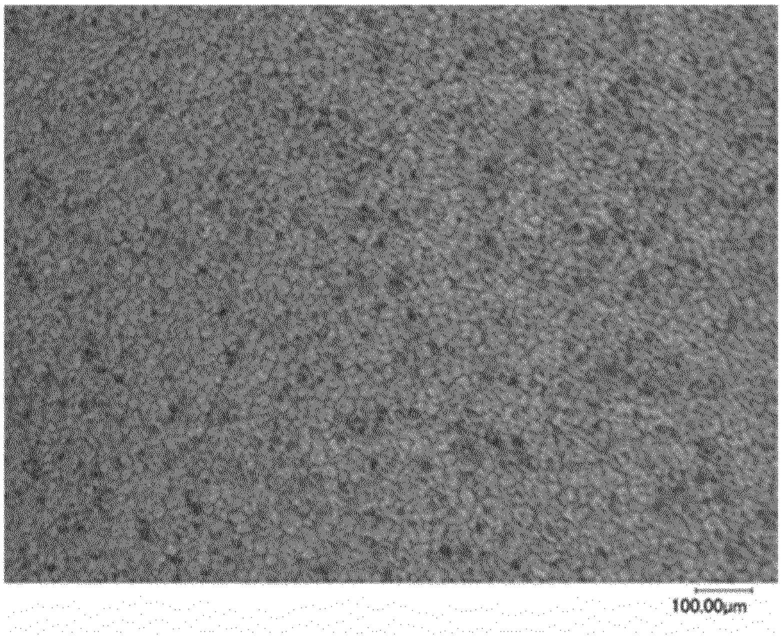


[FIG. 4]

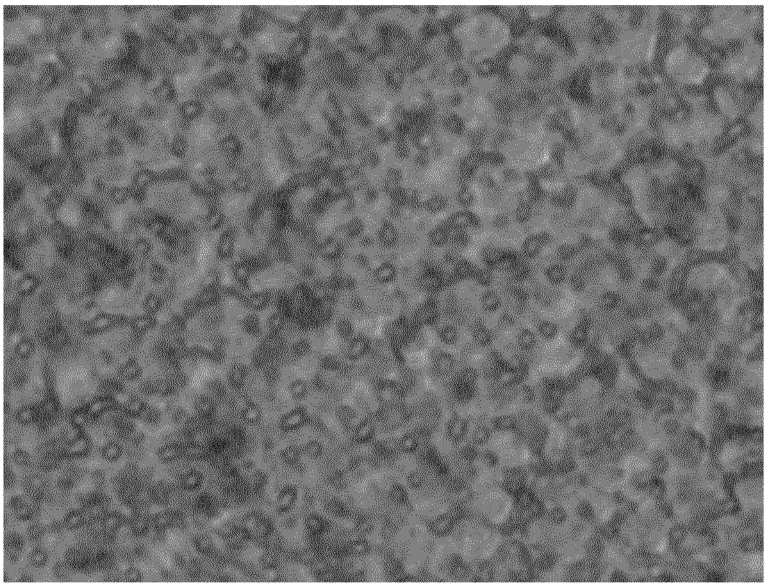

[FIG. 5]

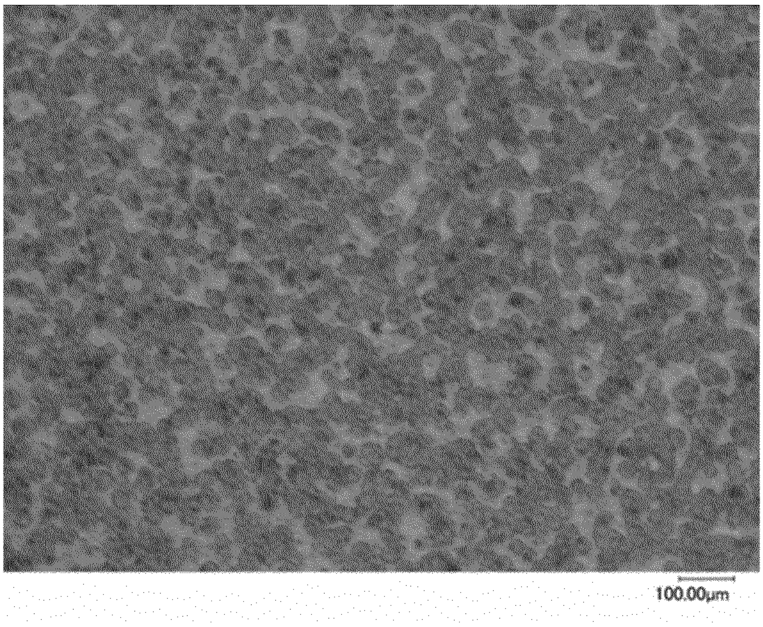

**INTERNATIONAL SEARCH REPORT**

International application No.
PCT/JP2019/043322

A. CLASSIFICATION OF SUBJECT MATTER
Int.Cl. B32B27/00(2006.01)i, C09J183/04(2006.01)i, C09J7/38(2018.01)i, C09J7/40(2018.01)i
FI: B32B27/00L, B32B27/00101, C09J7/40, C09J7/38, C09J183/04
According to International Patent Classification (IPC) or to both national classification and IPC

B. FIELDS SEARCHED
Minimum documentation searched (classification system followed by classification symbols)
Int.Cl. B32B27/00, C09J183/04, C09J7/38, C09J7/40

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br><br>Y | JP 5-77364 A (LINTEC CORPORATION) 30 March 1993, claims, paragraphs [0007], [0009], [0011]-[0013], [0040],<br>paragraph [0003] | 5-8, 13-16, 27<br><br><br>9-10, 17-26 |
| Y | WO 2016/152992 A1 (SHIN ETSU CHEMICAL CO., LTD.) 29 September 2016, claims, paragraphs [0011], [0110] | 9-10, 23-26 |
| Y | JP 2005-29712 A (NITTO DENKO CORPORATION) 03 February 2005, claims, paragraphs [0029]-[0033], [0049], [0055] | 19-22, 24-26 |
| P, Y | JP 2018-203873 A (LINTEC CORPORATION) 27 December 2018, claims, paragraphs [0035]-[0043] | 17-18, 23, 25-26 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.01.2020 | 21.01.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/043322

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-196846 A (MITSUBISHI PLASTICS INC.) 18 October 2012, claims, paragraphs [0001], [0005], [0008] | 1-27 |
| P, A | WO 2019/208141 A1 (SHIN ETSU CHEMICAL CO., LTD.) 31 October 2019, claims, paragraph [0007] | 1-27 |
| P, A | WO 2019/117059 A1 (MITSUBISHI CHEMICAL HOLDINGS CORP.) 20 June 2019, claims, paragraphs [0017], [0024], [0025], [0061], comparative examples 4, 5 | 1-27 |

Form PCT/ISA/210 (second sheet) (January 2015)

**INTERNATIONAL SEARCH REPORT**
Information on patent family members

International application No.
PCT/JP2019/043322

| | | |
|---|---|---|
| JP 5-77364 A | 30 March 1993 | (Family: none) |
| WO 2016/152992 A1 | 29 September 2016 | US 2018/0086915 A1, claims, paragraphs [0020]-[0022], [0194]<br>EP 3275961 A<br>EP 3536757 A<br>CN 107429145 A<br>KR 10-2017-0130501 A |
| JP 2005-29712 A | 03 February 2005 | (Family: none) |
| JP 2018-203873 A | 27 December 2018 | CN 108977097 A<br>KR 10-2018-0132514 A |
| JP 2012-196846 A | 18 October 2012 | (Family: none) |
| WO 2019/208141 A1 | 31 October 2019 | (Family: none) |
| WO 2019/117059 A1 | 20 June 2019 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011201035 A
- JP H06295016 A
- JP H07292081 A
- JP H01313521 A
- JP 2000006324 A
- EP 602731 A
- US 5391472 A


### Non-patent literature cited in the description


- Latest Trends in Conductive Polymer Technology. Toray Research Center, Inc, 01 June 1999
- *Chemical Substances Council,* November 1985
- **YUJI HARASAKI.** Coating Houhou'' (''Coating Method). Makishoten, 1979